**Europäisches Patentamt**

**European Patent Office**

**Office européen des brevets**

(19)

(11) **EP 1 555 669 A1**

(12) **EUROPEAN PATENT APPLICATION**
published in accordance with Art. 158(3) EPC

(43) Date of publication:
**20.07.2005 Bulletin 2005/29**

(51) Int Cl.⁷: **G11B 11/10**, G11B 11/105

(21) Application number: **03758878.7**

(22) Date of filing: **24.10.2003**

(86) International application number:
**PCT/JP2003/013626**

(87) International publication number:
**WO 2004/038715 (06.05.2004 Gazette 2004/19)**

(84) Designated Contracting States:
**AT BE BG CH CY CZ DE DK EE ES FI FR GB GR HU IE IT LI LU MC NL PT RO SE SI SK TR**

(30) Priority: **25.10.2002 WOPCT/JP02/11114**

(71) Applicant: **FUJITSU LIMITED**
**Kawasaki-shi, Kanagawa 211-8588 (JP)**

(72) Inventors:
• **KAMIMURA, Takuya, c/o FUJITSU LIMITED**
**Kawasaki-shi, Kanagawa 211-8588 (JP)**
• **TANAKA, Tsutomu, c/o FUJITSU LIMITED**
**Kawasaki-shi, Kanagawa 211-8588 (JP)**
• **TAMANOI, Ken, c/o FUJITSU LIMITED**
**Kawasaki-shi, Kanagawa 211-8588 (JP)**
• **MATSUMOTO, Koji, c/o FUJITSU LIMITED**
**Kawasaki-shi, Kanagawa 211-8588 (JP)**

(74) Representative: **Seeger, Wolfgang, Dipl.-Phys.**
**Georg-Hager-Strasse 40**
**81369 München (DE)**

(54) **MAGNETOOPTIC RECORDING MEDIUM, INFORMATION RECORDING/ REPRODUCING METHOD, AND MAGNETIC RECORDING DEVICE**

(57)     The present invention relates to a magneto-optical recording medium having a recording layer on which data is recorded by irradiation with recording light and application of a magnetic field and being irradiated with recording light and supplied with a magnetic field on the recording layer side. An object of the present invention is to provide a magneto-optical recording medium that is capable of being irradiated with a high-power laser beam without increasing media noise during reproduction and a recording layer of which can be heated sufficiently with a moderate-power laser beam to reduce its magnetic coercivity during recording. The magneto-optical recording medium includes a substrate; a first heat-dissipation layer that is formed on the substrate and has a predetermined high thermal conductivity; a separation layer that is formed on the first heat-dissipation layer and has a low thermal conductivity lower than the high thermal conductivity; a second heat-dissipation layer that is formed on the separation layer and has a predetermined thermal conductivity higher than the low thermal conductivity but lower than the high thermal conductivity; and a recording layer that is formed above the heat-dissipation layers and on which data is recorded by irradiation with recording light and application of a magnetic field.

Fig. 1

EP 1 555 669 A1

**Description**

Technical Field

The present invention relates to a magneto-optical recording medium having on a substrate a recording layer on which data is recorded by irradiation with recording light and application of a magnetic field and being irradiated with recording light and supplied with a magnetic field on the recording layer side, an information recording/reproducing method for recording and reproducing information on the magneto-optical recording medium, and a magnetic recording apparatus recording and reproducing information on the magneto-optical recording medium.

Background Art

Most of commercialized magneto-optical recording media have layers such as a recording layer, a heat-dissipation layer having a higher thermal conductivity than the recording layer, and a protective layer which protects those layers stacked on a transparent substrate and are irradiated with a recording optical beam and subjected to a magnetic field through the substrate to record information on it. To reproduce the information recorded on the recording layer, it is irradiated with a reproducing optical beam through the substrate.

In order to record information both optically and magnetically on magneto-optical recording media in high densities, studies have been conducted for reducing the spot size $\phi$ of the optical beam by focusing the optical beam applied to the recording layer by an objective lens. The relationship among the spot size $\phi$, the numerical aperture NA of the objective lens, and the wavelength $\lambda$ of the optical beam is commonly represented as $\phi = \lambda/2NA$. Therefore, the spot size $\phi$ can be reduced to increase the density by reducing the wavelength $\lambda$ of the optical beam or by increasing the numerical aperture NA of the objective lens. However, increasing the numerical aperture NA of the objective lens will reduce the focal distance and therefore irradiation with optical beam through the substrate as it has been in the past would pose the problem that the aberration will increase due to uneven thickness of the substrate or warpage of the substrate. A technology is known in which, in order to circumvent the problem, the numerical aperture NA of the objective lens is increased by applying the optical beam from the recording layer side, rather than the substrate side (see patent document 1, for example). The approach to applying the optical beam from the recording layer side is hereinafter referred to as the front illumination method. On a magneto-optical recording medium supporting the front illumination method, the heat-dissipation layer is provided nearer to the substrate than the recording layer because the optical beam is applied from the recording layer side.

In order to reduce the wavelength $\lambda$, a blue laser can be used instead of a red laser which has been conventionally used as the optical beam. However, circuit noise of drives having a blue-laser light source and photodetector that drive magneto-optical recording media is larger than that of drives having those for red laser beam. Furthermore, the conversion efficiencies of blue-laser photodetectors are lower than those of red-laser photodetectors and signal strengths (carriers) decrease during reproduction. Therefore, using a blue laser has the problem that the CNR (Carrier to Noise Ratio) is low compared with the case where a conventional red laser is used. In order to reduce circuit noise relatively and increase the carrier, a blue laser beam with as high reproduction power as possible may be used. However, when the recording layer is heated with laser irradiation during reproduction and the temperature of the recording layer exceeds its Curie temperature, its magnetic coercivity is lost and information recorded is deleted. Therefore, on the recording media, the heat-dissipation layer's capability of dissipating heat generated in the recording layer by laser irradiation should be improved. The heat-dissipation layer's capability has been increased by increasing the thickness of the heat-dissipation layer in the past.

The surface of the substrate of a magneto-optical recording medium is typically formed in patterns of projections and depressions. Lands (projections) and grooves (depressions) are formed along the patterns in the recording layer provided on the substrate. In the case of a front-illumination magneto-optical recording medium, the heat-dissipation layer is provided on the projection-depression patterned surface of a substrate and the recording layer is formed so that the undersurface of the recording layer contacts the surface of the heat-dissipation layer. Typically, the heat-dissipation layer is a metal layer and, as the thickness of the heat-dissipation layer is increased, the surface of the heat-dissipation layer tends to become granular and uneven. If the surface of the heat-dissipation layer of a front-illumination magneto-optical recording medium roughens, the surface roughness appears in the recording layer and the land-groove patterns become deformed. In a magneto-optical recording medium on which information is recorded at high density, lands and grooves are both placed along the track and marks, which are magnetized in a direction in accordance with a magnetic field applied, are formed in the lands and grooves. If the shape of lands/groove is deformed, the marks are also deformed and consequently the noise of the medium increases. Furthermore, during recording on a magneto-optical recording medium, the recording layer is heated by irradiation with recording laser beam and magnetic field is applied with the magnetic coercivity of the recording layer being reduced. Although the heat-dissipation capability can be increased and a high-power laser beam can be applied during reproduction by increasing the thickness of the heat-dissipation layer, heat sufficient for reducing the magnetic coercivity cannot be provided to the recording layer by irradiation with high-power laser beam during recording.

[Patent Document 1]

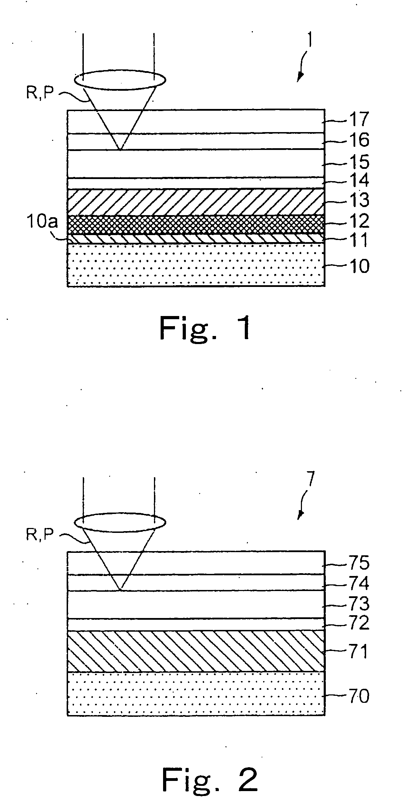

Japanese Patent Laid-Open No. 2000-306271 (Figure 1)

Disclosure of the Invention

In light of the circumstances described above, an object of the present invention is to provide a magneto-optical recording medium capable of being irradiated with a high-power laser beam without increasing media noise when being irradiated with the laser beam during reproduction and having a recording layer that can be heated sufficiently to reduce its magnetic coercivity with a moderate-power laser beam during recording, an information recording/reproducing method for recording and reproducing information on the magneto-optical recording medium, and a magnetic recording apparatus for recording and reproducing information on the magneto-optical recording medium.

A magneto-optical recording medium of the present invention that achieves the above-described object is characterized by including:

a substrate;
a first heat-dissipation layer that is formed on the substrate and has a predetermined high thermal conductivity;
a separation layer that is formed on the first heat-dissipation layer and has a low thermal conductivity lower than the high thermal conductivity;
a second heat-dissipation layer that is formed on the separation layer and has a predetermined thermal conductivity higher than the low thermal conductivity but lower than the high thermal conductivity; and
a recording layer that is formed above the heat-dissipation layers and on which data is recorded by irradiation with recording light and application of a magnetic field.

The magneto-optical recording medium of the present invention has a layered structure that supports a front-illumination method. Because the magneto-optical recording medium has two heat-dissipation layers, the first and second heat-dissipation layers, which are separated by the separation layer and eliminate the need for a heat-dissipation layer so thick that its surface becomes rough, the magneto-optical recording medium as a whole can provide an enough heat-dissipation capability such that it can be irradiated with a large-power laser beam during reproduction without increases in media noise.

During reproduction, the recording layer typically is continuously irradiated with a laser beam DC-wise and continuously heated. On the other hand, it is known that well-formed marks are recorded by intermittently irradiating the recording layer with a laser beam pulse-wise during recording. In this case, the recording layer is heated momentarily. In the magneto-optical recording medium of the present invention, the separation layer having a thermal conductivity lower than the two heat-dissipation layers is provided between them, and the second heat-dissipation layer on the recording layer side has a lower thermal conductivity than the first heat-dissipation layer on the substrate side. Therefore, heat continuously generated in the recording layer of the magneto-optical recording medium of the present invention while the recording layer is kept irradiated with the optical beam during reproduction is released from the recording layer to the second heat-dissipation layer to the separation layer to the first heat-dissipation layer. During recording, on the other hand, heat momentarily generated in the recording layer by irradiation with the laser beam transfers up to the second heat-dissipation layer and stops there, therefore the recording layer can be heated sufficiently to reduce its magnetic coercivity with a moderate-power recording optical beam.

Furthermore, the present invention can be applied to so-called "hard-disk-type" magneto-optical recording media from which information is reproduced by detecting magnetic fluxes of the recording layer, rather than irradiating the recording layer with an optical beam during reproduction. If the present invention is applied to such a hard-disk-type magneto-optical recording medium, the recording layer can be heated sufficiently to reduce its magnetic coercivity with a moderate-power laser beam during recording.

Preferably, each of the first and second heat-dissipation layers of the magneto-optical recording medium is made of a material which has one element selected from the group consisting of Al, Ag, Au, and Pt as the main component and to which at least one element selected from the group consisting of Cu, Pd, Si, Cr, Ti, and Co is added.

Al, Ag, Au, and Pt have high heat-dissipation capabilities and Cu, Pd, Si, Cr, Ti, and Co inhibit expansion of the particle diameter of Al, Ag, Au, and Pt. Furthermore, adding any of Cu, Pd, Si, Cr, Ti, and Co to a material having one element selected from the group consisting of Al, Ag, Au, and Pt as the main component reduces the thermal conductivity.

Preferably, both of the first and second heat-dissipation layers of the magneto-optical recording medium of the present invention are made of a non-magnetic material. It is also preferable that the separation layer is made of a material that contains at least one of elemental Si, elemental Al, and elemental C, or made of one compound selected from the group consisting of Si nitrides, Si oxides, Si carbides, Al nitrides, Al oxides, Fe carbides, Zn sulfides, and Zn oxides.

The surface of the second heat-dissipation layer of the magneto-optical recording medium of the present invention is preferably smoother than that of the first heat-dissipation layer.

The smooth surface of the second heat-dissipation layer allows formation of a well-shaped recording layer because the surface roughness of the second heat-dissipation layer ultimately affects the recording layer.

The surface of the separation layer of the magneto-optical recording medium of the present invention is preferably smoother than that of the second heat-dissipation layer.

It is extremely difficult to form, on the separation layer, a second dissipation layer having a surface roughness lower than that of the separation layer. Therefore, the formation of a well-shaped recording layer is ensured by making the separation layer smooth.

An information recording/reproducing method of the present invention that achieves the object described above includes: a recording step of recording, by irradiation with recording light and application of a magnetic field, information on a magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity, and a recording layer that is formed above the heat-dissipation layers and on which data is recorded by irradiation with recording light and application of a magnetic field; and a reproducing step of magnetically reproducing information from the recording layer side opposite to the substrate by detecting a magnetic flux of the recording layer.

A first magneto-optical recording medium that achieves the above-describe object includes: a recording section recording, by irradiation with recording light and application of a magnetic field, information on a magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity, and a recording layer that is formed above the heat-dissipation layers and on which data is recorded by irradiation with recording light and application of a magnetic field; and a reproducing section magnetically reproducing information from the recording layer side opposite to the substrate by detecting a magnetic flux of the recording layer.

A second magnetic recording apparatus that achieves the above-described object includes a single slider including: a light irradiating element irradiating a magneto-optical recording medium with light to heat a recording layer of the magneto-optical recording medium, the magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity; and the recording layer that is formed above the heat-dissipation layers and on which data is recorded by irradiation with recording light and application of a magnetic field; a magnetic-field applying element applying a magnetic field to the recording layer; and a magnetic-flux detecting element detecting a magnetic flux of the recording layer.

As has been described above, the present invention can provide a magneto-optical recording medium that can be irradiated with a large-power laser beam during reproduction without increasing media noise and the recording layer of which can be heated sufficiently to reduce its magnetic coercivity with a moderate-power laser beam during recording, an information recording/reproducing method for recording and reproducing information on the magneto-optical recording medium, and a magnetic recording apparatus recording and reproducing information on the magneto-optical recording medium.

Brief Description of the Drawings

Figure 1 is a diagram schematically showing a layered structure of a magneto-optical recording medium according to a first embodiment of the present invention.
Figure 2 is a diagram schematically showing an example of a layered structure of a conventional magneto-optical recording medium.

Figure 3 is a graph showing the dependence of CNR on the power of reproducing optical beams for the magneto-optical recording medium according to the first embodiment shown in Figure 1.

Figure 4 is a graph showing the dependence of CNR on the power of reproducing optical beams in a number of samples of heat-dissipation layers having different thicknesses.

Figure 5 is a graph showing results of measurements of erase noise.

Figure 6 is a graph showing the dependence of CNR on the power of recording optical beams for the magneto-optical recording medium shown in Figure 1.

Figure 7 is a graph showing the dependence of CNR on the power of recording optical beams in a number of samples of heat-dissipation layers having different thicknesses.

Figure 8 is a graph showing temperature distribution within the beam spot of the optical beam in each recording layer irradiated with the reproducing optical beam.

Figure 9 is a diagram schematically showing a layered structure of a magneto-optical recording medium according to a second embodiment.

Figure 10 is a diagram schematically showing an example of a layered structure of a RAD medium, which is a conventional magneto-optical recording medium.

Figure 11 is a graph showing the dependence of CNR on the power of reproducing optical beams for each of the magneto-optical recording media shown in Figures 9 and 10.

Figure 12 is a graph showing the dependence of CNR on the power of recording optical beams for each of the magneto-optical recording media shown in Figures 9 and 10.

Figure 13 is a graph showing results of measurements of erase noise of each of the magneto-optical recording media shown in Figures 9 and 10.

Figure 14 is a diagram schematically showing a layered structure of a magneto-optical recording medium according to a third embodiment.

Figure 15 is a diagram schematically showing an example of a layered structure of a DWDD medium, which is a conventional magneto-optical recording medium.

Figure 16 is a graph showing the dependence of CNR on the power of reproducing optical beams on each of the magneto-optical recording media shown in Figures 14 and 15.

Figure 17 is a graph showing the dependence of CNR on the power of recording optical beams on each of the magneto-optical recording media shown in Figures 14 and 15.

Figure 18 is a graph showing result of measurements of erase noise of each of the magneto-optical recording media shown in Figures 14 and 15.

Figure 19 is a diagram schematically showing a configuration of an embodiment of a magnetic recording apparatus which records information on a hard-disk-type magneto-optical recording medium and reproduces the recorded information.

Figure 20 is a graph showing an example of variations in magnetic coercivity and variations in saturation magnetization versus temperature for the magneto-optical recording medium shown in Figure 19.

Figure 21 is a flowchart illustrating an embodiment of an information recording/reproducing method according to the present invention.

Figure 22 is a graph showing an example of variations in CNR versus laser recording power of the magneto-optical recording medium shown in Figure 19.

Figure 23 is a diagram schematically showing a configuration of a combined slider of a magnetic recording apparatus with combined slider.

Figure 24 is a graph showing an example of variations in CNR versus recording current on the magneto-optical recording medium shown in Figure 23.

Best Mode for Carrying Out the Invention

Embodiments of the present invention will be described below.

Embodiments of a magneto-optical recording medium of the present invention will be described first.

Figure 1 is a diagram schematically showing a layered structure of a magneto-optical recording medium according to a first embodiment of the present invention.

The magneto-optical recording medium 1 shown in Figure 1 is a recording medium on which information is recorded by irradiation with a recording optical beam R and application of a magnetic field and from which information is reproduced by irradiation with a reproducing optical beam P. The magneto-optical recording medium 1 includes a substrate 10 and has a layered structure on the substrate that supports a front illumination method. That is, the magneto-optical recording medium 1 shown in Figure 1 has a first heat-dissipation layer 11, a separation layer 12, a second heat-dissipation layer 13, a recording facilitating layer 14, a recording layer 15, a protection layer 16, and a cover layer 17 stacked on the substrate 10 in that order. The substrate 10 is a glass 2P disc with a diameter of 120 mm and a thickness of 1.2 mm. The surface 10a of the substrate 10 is formed in patterns of projections and depressions, which are omitted from the figure. Each projection and depression has a width of 0.25 μm and a depth of 30 nm. DUV (Deep Ultra Violet) irradiation has been applied to the substrate 10 and an extremely smooth surface 10a with a surface roughness Ra of approximately 0.25 nm. The surface roughness Ra as referred to herein means the centerline average roughness specified in B0601 in Japanese Industrial Standards (commonly called JIS), revised in 1994. That is, if a portion equal to a measured length L is extracted from a roughness curve (75%) in the direction of its centerline, the centerline of the extracted portion is used as the x-axis and the vertical-axis direction is used as the y-axis, and the roughness curve (75%) is expressed as y = f (x), then the surface roughness can be expressed in nanometers by the following formula (1):

$$Ra = \frac{1}{L} \int_0^L |f(x)| \, dx \qquad \cdots\cdots (1)$$

In the following description, the surface roughness expressed by formula 1 is simply refereed to as the surface roughness Ra.

The first heat-dissipation layer 11, separation layer 12, and second heat-dissipation layer 13 shown in Figure 1 are non-magnetic layers, among which the first heat-dissipation layer 11 is a 10-nm-thick alloy film having Ag as the main component and contains Pd, Cu, and Si. The first heat-dissipation layer 11 was formed on the surface 10a of the substrate 10 by co-sputtering using an alloy target which has Ag as main component and to which Pd and Cu are added and Si target. The co-sputtering was performed under the following conditions: 0.5 Pa of gas pressure, 500 W of discharge electric power to the alloy target, and 320 W of discharge electric power to the Si target. The specific composition of the first heat-dissipation layer 11 is 96 at % of Ag, 1 at % of Pd, 1 at % of Cu, and 2 at % of Si.

The separation layer 12 is a SiN film with a thickness of 5 nm. The separation layer 12 was formed on the surface of the first heat-dissipation layer 11 by sputtering in a $N_2$ gas with a gas pressure of 0.3 Pa by using Si doped with B as the target.

The second heat-dissipation layer 13 is a 30-nm-thick alloy film which has Ag as the main component and to which Pd, Cu, and Si are added. The second heat-dissipation layer 13 was formed on the surface of the separation layer 12 by co-sputtering using an alloy target which has Ag as the main component and to which Pd and Cu are added and Si target. In the co-sputtering for forming the second heat-dissipation layer 13, the gas pressure is 0.5 Pa, the discharge electric power to the alloy target is 500 W, and the discharge electric power to the Si target is 320 W. The specific composition of the second heat-dissipation layer 13 is 94 at % of Ag, 1 at % of Pd, 1 at % of Cu, and 4 at % of Si. The Si content of the second heat-dissipation layer 13 is higher than that of the first heat-dissipation layer 11. The thermal conductivity of a heat-dissipation layer decreases with increasing Si content. Accordingly, the thermal conductivity of the second heat-dissipation layer 13 is lower than that of the first heat-dissipation layer 11.

The recording facilitating layer 14 is a 5-nm-thick GdFeCo magnetic film which functions such that recording can be made with a small magnetic field applied. The recording facilitating layer 14 was formed on the surface of the second heat-dissipation layer 13 by sputtering using a GdFeCo alloy as the target, with a discharge electric power of 500 W and a gas pressure of 0.5 Pa. The recording layer 15 is a TbFeCo magnetic film having a thickness of 25 nm. The recording layer 15 is formed on the surface of the recording facilitating layer 14 by sputtering using a TbFeCo alloy as the target, with a discharge electric power of 500 W and a gas pressure of 1.0 Pa. Lands (projections) and grooves (depressions) are formed on the recording layer 15 in conformity with the patterns of projections and depressions in the substrate surface 10a. In the magneto-optical recording medium 1, lands and grooves are both placed along the track and marks magnetized in a direction in accordance with a magnetic field applied are formed in the lands and grooves in order to record information at high density. The combination of the recording facilitating layer 14 and the recording layer 15 corresponds to the recording layer of the present invention.

The protection layer 16 is a 50-nm-thick SiN dielectric film having the function of protecting recording layer and other layers from moisture etc. The protection layer 16 is formed on the surface of the recording layer 15 by sputtering using Si doped with B as the target in a $N_2$ gas with a discharge electric power of 800 W and a gas pressure of 0.3 Pa.

The cover layer 17 functions as the substrate of the layered structure supporting the front illumination method and is a 15 micrometer-thick layer of a transparent UV cure resin. The cover layer 17 was formed on the surface of the protection layer 16 by applying a 15 micrometer-thick UV cure resin coat by spin-coating, then irradiating the coat with ultraviolet rays for approximately 30 seconds to cure it.

Using Figure 2, an example of a conventional magneto-optical recording medium will be described below just for reference.

Figure 2 is a diagram schematically showing an example of a layered structure of a conventional magneto-optical recording medium.

The magneto-optical recording medium 7 shown in Figure 2 is also a recording medium which supports the front illumination method and on which information is recorded by irradiation with a recording optical beam R and application of a magnetic field and is reproduced by irradiation with a reproducing optical beam P. The magneto-optical recording medium 7 does not have the separation layer 12 shown in Figure 1. The magneto-optical recording medium 7 has a heat-dissipation layer 71, a recording facilitating layer 72, a recording layer 73, a protection layer 74, and a cover layer 75 stacked on a substrate 70 in that order. That is, the magneto-optical recording medium 7 includes a single heat-dissipation layer. The specific composition of the single heat-dissipation layer 71 is 95 at % of Ag, 1 at % of Pd, 1 at % of Cu, and 3 at % of Si. For comparison, several sample magneto-optical recording media different in the thickness of the single heat-dissipation layer 71 were provided and experiments on the dependence of their CNRs (Carrier to Noise Ratios) on the power of a reproducing optical beam were performed. The results of the experiments will be described below.

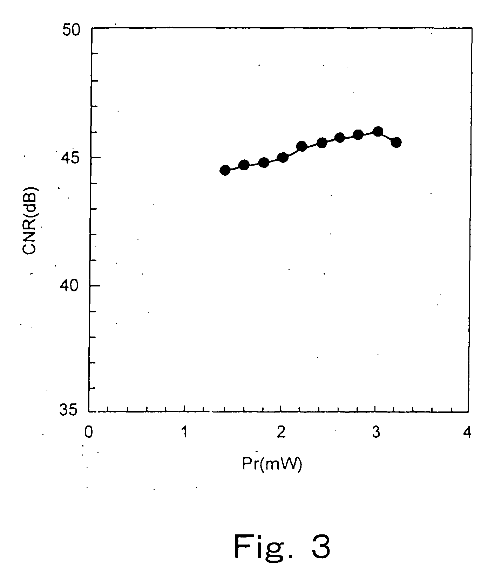

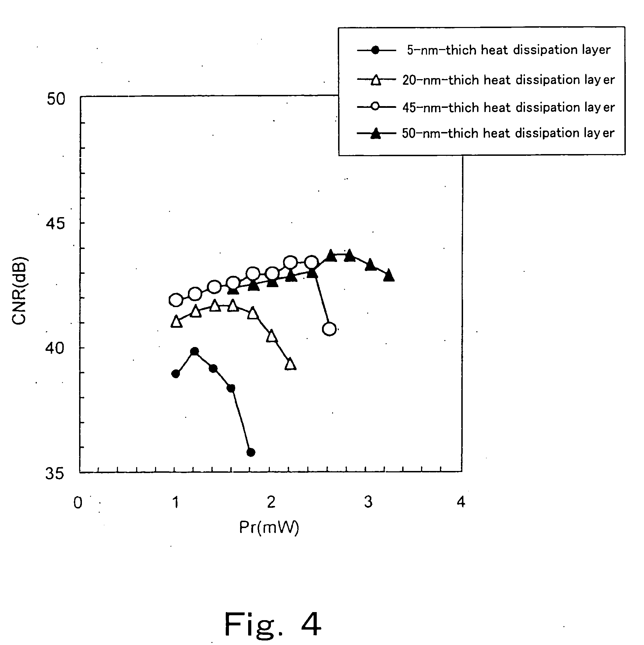

Figure 3 is a graph showing the dependence of the CNR of the magneto-optical recording medium of the first embodiment shown in Figure 1 on the power of a reproducing optical beam. Figure 4 is a graph showing the dependence of the CNRs of the samples having different heat-dissipation layer thicknesses on the power of the reproducing optical beam.

In the experiments, while rotating each magneto-optical recording medium, its recording layer was irradiated with a recording optical beam and supplied with a magnetic field through its cover layer to record marks representing information. Then, while rotating the magneto-optical recording medium, its recording layer was irradiated with the reproducing optical beam through the cover layer to reproduce information according to the recorded marks to obtain the CNR. During irradiation of the reproducing optical beam, its power levels were changed in several levels. The length of the marks recorded was 0.25 $\mu$m and the peripheral velocity of the magneto-optical recording medium during reproduction was 7.5 m/s.

The horizontal axis of the graphs shown in Figures 3 and 4 represents the power Pr of the reproducing optical beam (in mW) and the vertical axis represents the CNR (in dB). The solid curve connecting the solid circles plotted in Figure 4 represents the results for a sample whose heat-dissipation layer 71, shown in Figure 2, has a thickness of 5 nm. The solid curve connecting the outline triangles plotted represents the results for a sample whose heat-dissipation layer 71 has a thickness of 20 nm; the solid curve connecting the outline circles plotted represents the results for a sample whose dissipation layer 71 has a thickness of 45 nm; and the solid curve connecting solid triangles plotted represents the results for a sample whose heat-dissipation layer 71 has a thickness of 50 nm.

As shown in Figure 4, in the case of the sample magneto-optical recording media having only one heat-dissipation layer, the thicker the heat-dissipation layer, the higher the power of the reproducing optical beam that provides the maximum CNR (hereinafter referred to as the optimum Pr), the higher the value of the CNR at the optimum Pr. As one index of a practical-use media property, it is desirable that the value of CNR be greater than or equal to 45 dB. However, none of the magneto-optical recording media having only one heat-dissipation layer, including the one having the 50-nm-thick heat-dissipation layer, provided a CNR reaching 45 dB. This may be because, in the magneto-optical recording medium having the 50-nm-thick heat-dissipation layer, the excessive thickness of the heat-dissipation layer caused roughness of the surface of the heat-dissipation layer, which hampered lands/grooves from being formed on the recording layer so as to be neatly in conformance with the patterns of projections and depressions in the surface of the substrate, and thus marks were deformed and high noise resulted.

On the other hand, in the magneto-optical recording medium shown in Figure 1, the CNR value at the optimum Pr was improved by 2 dB or more compared with the sample medium having the 50-nm-thick heat-dissipation layer, increasing to 45 dB or more, which is sufficient for practical use, as shown in Figure 3. One contributing factor for this may be that, because the thickness of the first heat-dissipation layer 11 has a thickness of 10 nm and the second heat-dissipation layer 13 has a thickness of 30 nm, that is, the thicknesses of both heat-dissipation layers 11, 13 are less than 50 nm, which makes it difficult to form neat patterns of projections and depressions on the recording layer, patterns of projections and depressions neatly in conformance with the patterns of projections and depressions formed on the substrate surface 10a were first formed on the surface of the first heat-dissipation layer 11, then neat patterns of projections and depressions were also formed on the surface of the second heat-dissipation layer 13 through the separation layer 12, and finally lands/grooves neatly in conformance with the patterns of projections and depressions formed on the substrate surface 10a were formed in the recording layer 15. That is, because the neat lands/grooves formed may account for the neat marks formed in the lands and grooves, and therefore low noise. Another factor may be that the optimum Pr of the magneto-optical recording medium shown in Figure 1 is greater than that of the sample medium having the 50-nm-thick heat-dissipation layer and accordingly the carrier (signal strength) was increased.

Noise levels (erase noise) at different frequencies were measured after DC erasing the magneto-optical recording medium shown in Figure 1 in one direction. The results will be described. For the measurements, two other samples were provided in addition to the magneto-optical recording medium shown in Figure 1 and their erase noise levels were also measured for comparison. One of the two samples is the magneto-optical recording medium having the layered structure shown in Figure 2, in which the separation layer shown in Figure 1 does not exist. The specific composition of the single heat-dissipation layer provided in this sample is 95 at % of Ag, 1 at % of Pd, 1 at % of Cu, and 3 at % of Si. The thickness of the heat-dissipation layer is 40 nm. The other sample has a separation layer and first and second heat-dissipation layers separated by the separation layer. However, unlike the magneto-optical recording medium shown in Figure 1, in this magneto-optical recording medium, the second heat-dissipation layer on the recording layer side has a higher thermal conductivity than the first heat-dissipation layer on the substrate side. In this sample, the thermal conductivity of the second heat-dissipation layer is increased compared with the first heat-dissipation layer by decreasing the content of Si; the composition of the second heat-dissipation layer is 97 at % of Ag, 1 at % of Pd, 1 at % of Cu, and 1 at % of Si.

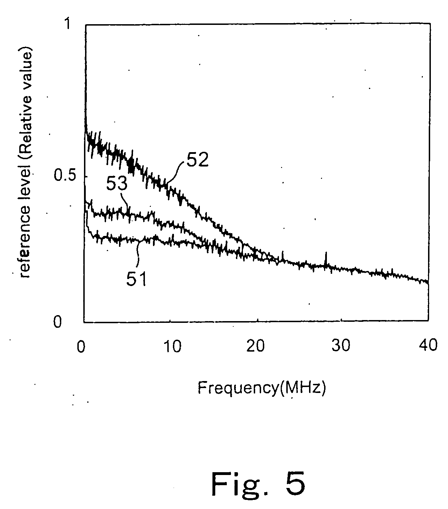

Figure 5 is a graph showing the results of measurements of erase noise.

The horizontal axis of the graph shown in Figure 5 represents frequency (in MHz) and the vertical axis represents erase noise level. The maximum erase noise level in a sample having a 40-nm-thick heat-dissipation layer is normalized as 1 and each noise level is represented as the ratio to this. Shown in Figure 5 are the solid curve 51 representing the erase noise of the magneto-optical recording medium shown in Figure 1, the solid curve 52 representing the erase noise of the sample having the 40-nm-thick heat-dissipation layer, and the solid curve 53 representing the erase noise of the sample whose second heat-dissipation layer has a higher thermal conductivity than the first heat-dissipation layer. The areas enclosed by the solid curves and the vertical and horizontal axes are equivalent to the erase noise levels of the magneto-optical recording media at all frequencies measured. It can be seen from the graph in Figure 5 that erase noise can be reduced by providing a separation layer to separate a heat-dissipation layer into two and making the first heat-dissipation layer on the substrate side have a higher thermal conductivity than the second heat-dissipation layer on the recording layer side.

As shown in Table 1, erase noise can also be reduced with other compositions of the first and second heat-dissipation layers.

Table 1

| First heat-dissipation layer | None | Ag96Pd1Cu1Si2 | Al95Ti5 | Au95Ti5 | Al60Cr40 | Pt95Ti5 | Pt95Co5 | Ag95Ni5 |
|---|---|---|---|---|---|---|---|---|
| Separation layer | SiN 5nm | SiN 5nm | SiN 5nm | SiN 5nm | SiN 5nm | SiN 5nm | SiN 5nm | SiN 5nm |
| Second heat-dissipation layer | Ag95Pd1Cu1Si3 | Ag94Pd1Cu1Si4 | Al90Ti10 | Au90Ti10 | Al50Cr50 | Pt90Ti10 | Pt90Co10 | Ag90Ni10 |
| Erase noise | 1 | 0.45 | 0.5 | 0.49 | 0.51 | 0.47 | 0.47 | 0.46 |

EP 1 555 669 A1

In Table 1, the compositions of the first and second heat-dissipation layers are shown in the upper section and the erase noise levels of the magneto-optical recording media having layers having the compositions shown in the upper section at all frequencies measured are shown in the lower section. The erase noise levels shown here are represented by the ratio to 1, which is the normalized erase noise level, at all frequencies measured, of the sample that has the single 50-nm-thick heat-dissipation layer and was used in the experiment the results of which are shown in Figure 4. The erase noise of the sample having the 50-nm-thick heat-dissipation layer is indicated as 1 at the far left of Table 1. "Ag95Pd1Cu1Si3" shown in the upper section of Table 1 for the second heat-dissipation layer of this sample represents 95 at % of Ag, 1 at % of Pd, 1 at % of Cu, and 3 at % of Si. Each numeric in the other similar expressions in the upper section of Table 1 represents the atomic percents of the element preceding it. Shown to the immediate right of this sample is the erase noise level of the magneto-optical recording medium shown in Figure 1.

All of the six magneto-optical recording media indicated to the right of the magneto-optical recording medium in Figure 1 have a 10-nm-thick first heat-dissipation layer on the substrate side and a 30-nm-thick second heat-dissipation layer on the recording-layer side, and the first heat-dissipation layer has a higher thermal conductivity than the second heat-dissipation layer. It can be seen that the erase noise of the six magneto-optical recording media is lower than that of the sample having the 50-nm-thick heat-dissipation layer by approximately half, and each of the first and second heat-dissipation layers is not limited to the Al alloy film provided in the magneto-optical recording medium described with respect to Figure 1, to which Si, Pd, and Cu are added, but instead may be an alloy film which has one element selected from the group consisting of Al, Ag, Au, and Pt as the main component and to which an element selected from the group consisting of Si, Cr, Ti, and Co is added. Al, Ag, Au, and Pt have a good heat dissipation capability, and their thermal conductivities can be controlled by adding at least one element selected from the group consisting of Cu, Pd, Si, Cr, Ti, and Co. That is, a metal film that has one element selected from the group consisting of Al, Ag, Au, and Pt as the main component and contains more Cu, Pd, Si, Cr, Ti, or Co content will have a lower thermal conductivity. Therefore, the second heat-dissipation layer should contain a larger amount of these dopant elements than the first heat-dissipation layer. Furthermore, Cu, Pd, Si, Cr, Ti, and Co all have the capability of inhibiting expansion of the particle size of Al, Ag, Au, and Pt. Therefore, adding these elements can inhibit the surface of the heat-dissipation layer from becoming granular and uneven, thereby preventing an increase in noise.

Experiments on the dependence of the CNR on the power of a recording optical beam were also conducted and the result of which will be described below. In addition to the magneto-optical recording medium shown in Figure 1, the same samples as those used in the experiment on the dependence of the CNR on the power of the reproducing optical beam, which have heat-dissipation layers with different thicknesses, were also provided and used in this experiment for comparison.

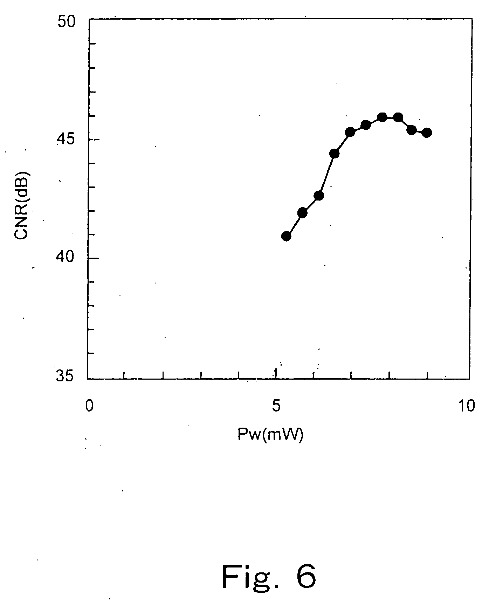

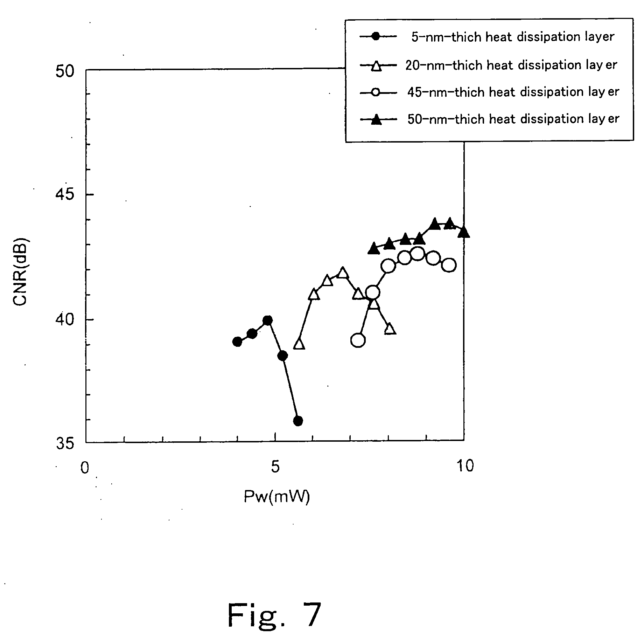

Figure 6 is a graph showing the dependence of the CNR of the magneto-optical recording medium shown in Figure 1 on the power of recording optical beam; Figure 7 is a graph showing the dependences of the CNRs of the samples having heat-dissipation layers with different thicknesses on the power of the recording optical beam.

In this experiment, the power of the recording optical beam was changed in several levels and the CNRs were measured in a similar manner as in the experiment on the dependences of the CNRs on the power of the reproducing optical beam. That is, the length of the mark recorded was 0.25 $\mu$m and the peripheral velocity of the magneto-optical recording medium during reproduction was 7.5 m/s.

The horizontal axis of the graphs shown in Figures 6 and 7 represents the power Pw of the recording optical beam (in mW) and the vertical axis represents the CNR (in dB). As in Figure 3, the solid curve connecting the solid circles plotted in Figure 7 represents the results for a sample including a heat-dissipation layer with a thickness of 5 nm; the solid curve connecting the outline triangles plotted represents the results for a sample including a heat-dissipation layer with a thickness of 20 nm; the solid curve connecting the outline circles plotted represents the results for a sample including a heat-dissipation layer with a thickness of 45 nm, and the solid curve connecting the solid triangles plotted represents the results for a sample including a heat-dissipation layer with a thickness of 50 nm.

As shown in Figure 7, in the case of the sample magneto-optical recording media having only one heat-dissipation layer, the thicker the heat-dissipation layer, the higher the power of the recording optical beam that provides the maximum CNR (hereinafter referred to as the optimum Pw). The CNR value in recording at the optimum Pw was matched to the CNR value in recording at the optimum Pr. The CNR values of the sample magneto-optical recording media having only one heat-dissipation layer were lower than 45 dB.

On the other hand, as shown in Figure 6, the CNR value of the magneto-optical recording medium shown in Figure 1 at the optimum Pw was also matched to the CNR value in recording at the optimum Pr, which reached 45 dB or more, sufficient for practical use. Furthermore, the value of the optimum Pw was lower than that of the sample having the 50-nm-thick heat-dissipation layer by 2 mW or more. Typically in reproducing optical beam irradiation, the recording layer is irradiated with a laser beam continuously DC-wise and constantly heated. In recording optical beam irradiation, on the other hand, the recording layer is irradiated with a laser beam intermittently pulse-wise and heated momentarily. In the magneto-optical recording medium 1 shown in Figure 1, the separation layer 12 is provided between the first heat-dissipation layer 11 and the second heat-dissipation layer 13, which has a lower thermal conductivity than those of the heat-dissipation layers 11, 13, and the second heat-dissipation layer 13 on the recording layer side has a lower thermal conductivity than the first heat-dissipation layer 11 on the substrate side. Therefore, it is considered that in this magneto-optical recording medium 1, heat which is generated in the recording layer 15 by the continuous irradiation with the laser beam during reproduction is released through the recording layer 15 to the recording facilitating layer 14 to the second heat-dissipation layer 13 to the separation layer 12 to the first heat-dissipation layer 11, whereas heat momentarily generated in the recording layer 15 by the intermittent irradiation with the laser beam for recording transfers up to the second heat-dissipation layer 13 and stops there. That is, in the magneto-optical recording medium 1 shown in Figure 1, both of the second heat-dissipation layer 13 on the recording layer side and the first heat-dissipation layer 11 on the substrate side contribute to the dissipation of heat generated in the recording layer 15 by irradiation with reproducing optical beam, whereas only the second heat-dissipation layer 13 contributes to the dissipation of heat generated in the recording layer 15 by irradiation with the recording optical beam. Therefore, it is considered that, in the magneto-optical recording medium 1 shown in Figure 1, heat sufficient for reducing the magnetic coercivity of the recording layer 15 can be provided with a moderate-power recording optical beam and therefore the value of the optimum Pr can be increased while decreasing the value of the optimum Pw, as shown in Figure 6. Irradiation with a laser beam having an excessively high power during recording would deform the marks and noise would increase.

The meaning of the lower thermal conductivity of the second heat-dissipation layer 13 on the recording layer side than that of the first heat-dissipation layer 11 of the substrate side in the magneto-optical recording medium shown in Figure 1 will be described in further detail below. In addition to the magneto-optical recording medium shown in Figure 1 in which the thermal conductivity $\sigma 1$ of the first heat-dissipation layer 11 > the thermal conductivity $\sigma 2$ of the second heat-dissipation layer 13, a magneto-optical recording medium in which the thermal conductivity $\sigma 1$ of the first heat-dissipation layer 11 < the thermal conductivity $\sigma 2$ of the second heat-dissipation layer 13, which is the relationship opposite to that in the former one, was provided as a sample for comparison. The recording layer of each magneto-optical recording medium was irradiated with a reproducing optical beam from the cover layer side and the temperature distribution within the beam spot of the optical beam in the recording layer was examined.

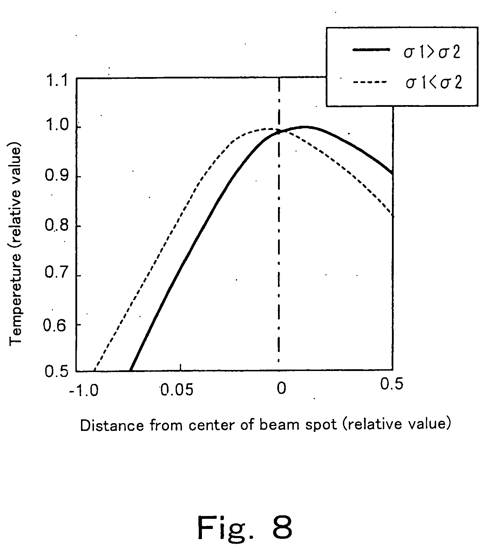

Figure 8 is a graph showing the temperature distribution within the beam spot of the optical beam in each recording layer irradiated with the reproducing optical beam.

The horizontal axis of the graph in Figure 8 represents the distance from the center of beam spot of the reproducing optical beam. The distance from the beam spot center 0 to the end of the beam spot in the forward direction of rotation of the magneto-optical recording medium is indicated as +1.0 and the other end is indicated as -1.0. Therefore, the beam spot moves toward the negative side. Herein, the negative side is referred to as "forward" and the positive side is referred to as "rearward" with respect to the direction of movement of the beam spot. The vertical axis of the graph in Figure 8 represents the temperature in the recording layer within the beam spot of the reproducing optical beam. The temperature here is indicated by the ratio to the highest temperature within the beam spot normalized as 1. In Figure 8, the solid curve indicates the temperature distribution of the magneto-optical recording medium which is shown in Figure 1 and in which the thermal conductivity $\sigma 1$ of the first heat-dissipation layer 11 > the thermal conductivity $\sigma 2$ of the second heat-dissipation layer 13 and the dashed curve indicates the temperature distribution of the sample magneto-optical recording medium in which the thermal conductivity $\sigma 1$ of the first heat-dissipation layer 11 < the thermal conductivity $\sigma 2$ of the second heat-dissipation layer 13, which is the relationship opposite to that in the former one.

It is known that an ideal signal can be obtained on a magneto-optical recording medium when the position of the peak temperature within the beam spot comes to a position slightly rearward from the beam spot center of the reproducing optical beam during reproduction. This is especially important for a super-resolution media (for example, RAD: Rear Aperture Detection) and expansion system media (for example, DWDD: Domain Wall Displacement Detection), which involve provision of temperature distribution areas such as low-temperature masks, medium-temperature reproduction sections, and high-temperature masks. As shown in Figure 8, in the sample magneto-optical recording medium, the peak temperature position in the beam spot of the reproducing optical beam is forward of the center of beam spot of the reproducing optical beam, whereas in the magneto-optical recording medium shown in Figure 1, the peak temperature position is slightly rearward of the beam spot center. It is considered that while the second heat-dissipation layer 13 on the recording layer side must have a heat-dissipation capability sufficient for maintaining magnetic coercivity when the recording layer 15 heated by irradiation with the reproducing optical beam exceeds Curie temperature in order to achieve a high carrier, too high a heat dissipation capability would cause the peak temperature position in the beam spot of the reproducing optical beam to come to a position forward of the beam spot center of the reproducing optical beam.

The relationship among surface roughnesses Ra of the first heat-dissipation layer 11, separation layer 12, and second heat-dissipation layer 13 was investigated, which will be described below.

In the investigation, five sample magneto-optical recording media having the layered structure shown in Figure 1 with different combinations of surface roughnesses Ra of the three layers were provided. The first heat-dissipation layer 11 and second heat-dissipation layer 13 of all the samples were both alloy films. The thickness of the first heat-dissipation layer 11 was 10 nm and that of the second heat-dissipation layer 13 was 30 nm. The separation layer 12 of all samples was a SiN film having a thickness of 5 nm. In producing the sample, the layers were deposited by sputtering. The surface roughness Ra of the three layers were controlled by changing the pressure of sputtering gas and discharge electric power. For evaluation, the CNR at the optimum Pw and Pr was calculated. The length of recorded marks was 0.3 μm and the peripheral velocity of the magneto-optical recording medium during reproduction was 7.5 m/s in the CNR calculation.

Table 2 shows the CNRs of the samples (media A to E).

Table 2

| | First heat-dissipation layer Ra Ra1 (nm) | Separation layer Ra Ra0 (nm) | Second heat-dissipation layer Ra Ra2 (nm) | CNR (dB) | Noise (dB) | Carrier (dB) |
|---|---|---|---|---|---|---|
| Medium A | 0.25 | 0.18 | 0.2 | 46.0 | -80.0 | -34.0 |
| Medium B | 0.3 | 0.18 | 0.2 | 45.9 | -79.8 | -33.9 |
| Medium C | 0.2 | 0.18 | 0.4 | 43.5 | -77.5 | -34.0 |
| Medium D | 0.2 | 0.35 | 0.6 | 43.3 | -77.2 | -33.9 |
| Medium E | 0.3 | 0.5 | 0.8 | 41.0 | -74.8 | -33.8 |

In Table 2, the surface roughness Ra (Ra1) of the first heat-dissipation layer, the surface roughness Ra (Ra0) of the separation layer, the surface roughness Ra (Ra2) of the second heat-dissipation layer, and the CNR (in dB) during reproduction of each sample are shown in their individual columns. To the right of the CNR column, the values of noise (in dB) and carrier (in dB) measured for calculating the CNR are shown.

In media A and B, the surface roughness Ra1 of the first heat-dissipation layer > the surface roughness Ra2 of the second heat-dissipation layer. In media C, D, and E, the surface roughness Ra1 of the first heat-dissipation layer < the surface roughness Ra2 of the second heat-dissipation layer. The media A and B in which Ra1 > Ra2 both provide a CNR of greater than or equal to 45 dB, which is sufficient for practical use, whereas media C to E in which Ra1 < Ra2 provide a CNR of less than 45 dB, which is the relationship opposite to that in the former one. This may be because: the recording facilitating layer on which the recording layer is deposited was formed on the second heat-dissipation layer and therefore the lower surface roughness of the second heat-dissipation layer led to formation of lands/grooves on the recording layer neatly in confirmation with the patterns of projections and depressions in the substrate surface, which resulted in the low noise. Therefore, it is preferable that the surface of the second heat-dissipation layer should be smoother than that of the first heat-dissipation layer.

The surface roughness Ra of the separation layer of any of the five media was lower than the surface roughness Ra of the second heat-dissipation layer because it is difficult to form the second heat-dissipation layer, which is an alloy film, having a surface roughness Ra1 lower than or equal to the surface roughness Ra0 of the separation layer, which is a SiN film, contacting the undersurface of the second heat-dissipation layer by sputtering.

The material of the separation layer was also studied and will be described.

The separation layer 12 of the magneto-optical recording medium shown in Figure 1 is a SiN film. In this study, samples of a magneto-optical recording medium having the layered structure shown in Figure 1 are provided of which the separation layers 12 are a C film, Si film, $SiO_2$ film, SiC film, Al film, AlN film, $Al_2O_3$ film, FeC film, ZnS film, and ZnO film, instead of the SiN film, and their CNRs at the optimum Pw and Pr are calculated. The length of recorded marks was 0.30 μm and the peripheral velocity of the magneto-optical recording media during reproduction was 7.5 m/s in the CNR calculation.

Table 3 shows the CNR calculated for each sample and the optimum Pr and Pw used for the calculation of the CNR.

Table 3

| Separation layer | SiN | C | Si | $SiO_2$ | SiC | Al | AlN | $Al_2O_3$ | FeC | ZnS | ZnO |
|---|---|---|---|---|---|---|---|---|---|---|---|
| Thickness (nm) | 5 | 3 | 3 | 5 | 5 | 6 | 5 | 5 | 5 | 5 | 5 |
| Pr(mW) | 2.8 | 2.8 | 2.8 | 2.8 | 2.8 | 2.8 | 2.8 | 2.8 | 2.8 | 2.8 | 2.8 |
| Pw(mW) | 7.6 | 7.4 | 7.4 | 7.4 | 7.6 | 7.4 | 7.4 | 7.6 | 7.6 | 7.6 | 7.6 |
| CNR(dB) | 45.6 | 45.5 | 45.1 | 45.4 | 45.4 | 45.1 | 45.3 | 45.3 | 45.5 | 45.5 | 45.2 |

In Table 3, the top row contains the films of the separation layers 12 and the rows below it contain the thickness of the separation layer (in nm), the optimum Pr (in mW), the optimum Pw (in mW), and the CNR (in dB) of each sample. The column of the SiN-film separation layer 12, shown at the left of Table 3, indicates the optimum Pr and Pw and the CNR of the magneto-optical recording medium shown in Figure 1.

As shown in Figure 3, the optimum Pr value of all sample magneto-optical recording media is 2.8 mW, which is the same as the optimum Pr value of the magneto-optical recording medium shown in Figure 1. Thus, it can be seen that high optimum Pr values were achieved. Furthermore, the CNR values of all samples are higher than or equal to 45 dB, sufficient for practical use. The sample magneto-optical recording media provided an optimum Pw value of 7.6 mW, which is the same as the optimum Pw value of the magneto-optical recording medium shown in Figure 1 or 7.4 mW, which is lower than it. Thus, it can be seen that low optimum Pw values were achieved. Therefore, the separation layer is not limited to SiN film. It may be made from a material containing at least one element selected from the group consisting of elemental Si, elemental Al, and elemental C, or made from one compound selected from the group consisting of Si oxides, Si carbide, Al nitrides, Al oxides, Fe carbides, Zn sulfides, and Zn oxides.

The surface roughness of the first heat-dissipation layer can be improved by forming the separation layer, which contacts the undersurface of the first-dissipation layer, by a film (such as a Si film or SiN film) having particles with a smaller diameter than that of the particles making up the first heat-dissipation layer, which is an alloy film having one element selected from the group consisting of Al, Ag, Au, and Pt as the main component, because the gaps between the particles in the surface of the first heat-dissipation layer can be filled with the particles with the smaller diameter.

A magneto-optical recording medium according to a second embodiment of the present invention will be described below.

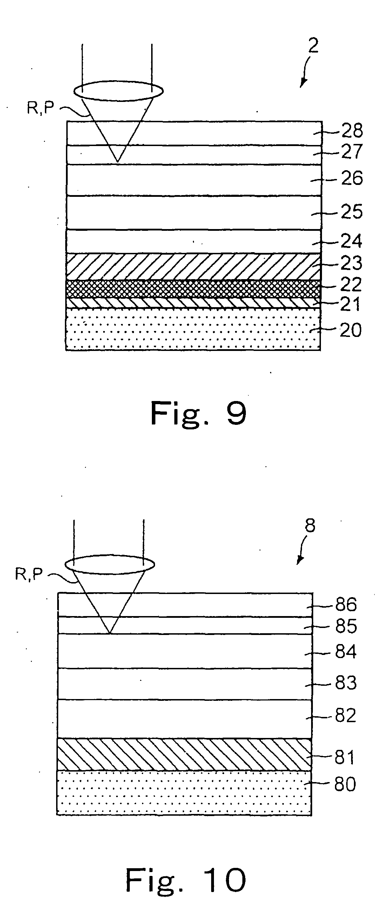

Figure 9 is a diagram schematically showing a layered structure of a magneto-optical recording medium according to the second embodiment.

The magneto-optical recording medium 2 shown in Figure 9 is a RAD medium, which is a super-resolution media on which information is recorded by irradiation with a recording optical beam R and application of a magnetic field and from which information is reproduced by irradiation with a reproducing optical beam P and application of a magnetic field. The magneto-optical recording medium 2, like the magneto-optical recording medium 1 of the first embodiment, has a substrate 20 and a front-illumination layered structure on the substrate 20. However, the layered structure is a RAD-medium-specific structure. That is, in the magneto-optical recording medium 2 shown in Figure 9, a first heat-dissipation layer 21, a separation layer 22, and a second heat-dissipation layer 23 are stacked in that order on the substrate 20 as in the magneto-optical recording medium 1 of the first embodiment, however, stacked on the second heat-dissipation layer 23 are a recording layer 24, an intermediate layer 25, a reproduction layer 26, a protection layer 27, and a cover layer 28 in that order. The substrate 20 of the magneto-optical recording medium 2 is of the same material and shape as the substrate 10 of the magneto-optical recording medium 1 of the first embodiment and therefore the substrate 20. Although omitted from the figure, the surface of the substrate has patterns of projections and depressions. Among the layers 21 to 28 provided in the magneto-optical recording medium 2, the thickness, composition, and deposition conditions of the layers 21 to 24, and 28, excluding the intermediate layer 25, reproduction layer 26, and protection layer 27, are the same as those of the layers 11 to 13, 15, and 17 with the same name as those of the magneto-optical recording medium 1 of the first embodiment. Accordingly, also in the magneto-optical recording medium 2, the relationship, the thermal conductivity of the first heat-dissipation layer 21 on the substrate 20 side > the thermal conductivity of the second heat-dissipation layer 23 on the recording layer 24 side > the thermal conductivity of the separation layer 22, holds.

The first heat-dissipation layer 21 and the second heat-dissipation layer 23 shown in Figure 9 are not limited to Al alloy films to which Si, Pd, and Cu are added but may have compositions shown in Table 1. The separation layer 22 is also not limited to a SiN film but may be any of the films shown in Table 3. Preferably, the relationship among the surface roughnesses Ra of the first heat-dissipation layer 21, separation layer 22, and second heat-dissipation layer 23 is: the surface roughness Ra of the first heat-dissipation layer 21 > the surface roughness Ra of the second heat-dissipation layer 23 > the surface roughness Ra of the separation layer 22.

Only the intermediate layer 25, reproduction layer 26, and protection layer 27 shown in Figure 2 will be described below and the description of the other layers will be omitted. The intermediate layer 25 is a GdFeCoSi magnetic film formed on the surface of the recording layer 24 by placing a GdFeCo alloy on the surface of the recording layer 24 as the target, placing a Si chip on the target, and performing sputtering under a discharge power of 500 W and a gas pressure of 0.54 Pa. The intermediate layer 25 is magnetized by the magnetic fields of marks formed on the recording layer 24 by heating under irradiation with a reproducing optical beam P.

The reproduction layer 26 is a GdFeCo magnetic film formed on the surface of the intermediate layer 25 by sputtering under a discharge power of 800 W and a gas pressure of 0.86 Pa by using a GdFeCo alloy as the target. Formed on the reproduction layer 26 are areas that are magnetized in the same direction as the direction of magnetization of the marks formed in the recording layer during reproduction and are larger than the marks.

The protection layer 27 shown in Figure 2 is different from the protection layer 16 shown in Figure 1 in gas pressure in deposition conditions. The protection layer 16 shown in Figure 1 was deposited by sputtering under a gas pressure of 0.3 Pa, whereas the protection layer 27 shown in Figure 2 was deposited by sputtering under a gas pressure of 0.5 OPa.

For reference, an example of a conventional RAD medium will be described with respect to Figure 10.

Figure 10 is a diagram schematically showing an example of a layered structure of a magneto-optical recording medium, which is a conventional RAD medium.

The magneto-optical recording medium 8 shown in Figure 10 is a front-illumination RAD medium on which information is recorded by irradiation with a recording optical beam R and application of a magnetic field and from which information is reproduced by irradiation with a reproducing optical beam P and application of a magnetic field. In the RAD medium, namely the magneto-optical recording medium 8, the separation layer 22 shown in Figure 9 does not exist and a heat-dissipation layer 81, a recording layer 82, an intermediate layer 83, a reproduction layer 84, a protection layer 85, and a cover layer 86 are stacked in that order on a substrate 80. That is, the magneto-optical recording medium 8 includes only one heat-dissipation layer. The specific composition of the single heat-dissipation layer 81 is 95 at % of Ag, 1 at % of Pd, 1 at % of Cu, and 3 at % of Si. The thickness of the heat-dissipation layer 81 is 40 nm.

Experiments were conducted on dependence of the CNRs of the magneto-optical recording media shown in Figures 9 and 10 on the power of a reproducing optical beam and a recording optical beam. The results will be described below.

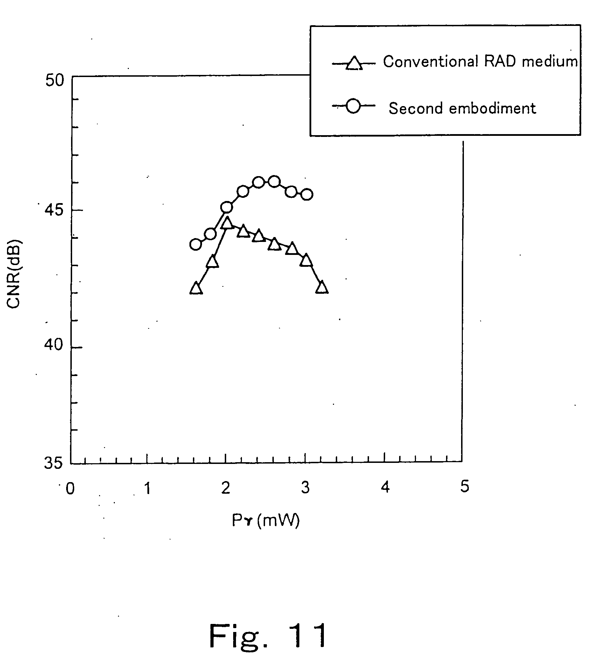

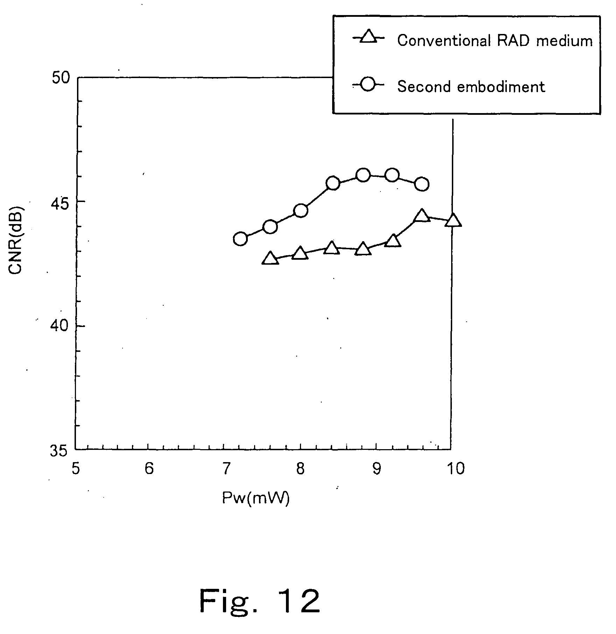

Figure 11 is a graph showing the dependence of the CNR of each of the magneto-optical recording media shown in Figures 9 and 10 on the power of a reproducing optical beam. Figure 12 is a graph showing the dependence of the CNR of each of the two magneto-optical recording media on the power of a recording optical beam.

In the experiments, marks representing information are recorded on the recording layer by irradiating it with the recording optical beam and applying a magnetic field through the cover layer while rotating the magneto-optical recording medium. During irradiation of the recording optical beam, its power levels were changed in several levels to obtain the optimum Pw. Then, the information based on the recorded marks is reproduced by irradiation with the reproducing optical beam and application of a magnetic field through the cover layer to obtain the CNR while rotating the magneto-optical recording medium. During irradiation of the reproducing optical beam, its power levels were changed in several levels to obtain the optimum Pr. The length of the marks recorded was 0.20 μm and the peripheral velocity of the magneto-optical recording medium during reproduction was 7.5 m/s.

The horizontal axis of the graph shown in Figure 11 represents the power Pr (in mW) of the reproducing optical beam and the horizontal axis of the graph shown in Figure 12 represents the power Pw (in mW) of the recording optical beam. The vertical axis of each of the graphs shown in Figures 11 and 12 represents the CNR (in dB). In Figures 11 and 12, the solid curves connecting the circles plotted represent the results for the magneto-optical recording medium 2 of the second embodiment shown in Figure 9 and the solid curves connecting the triangles plotted represent the results for the magneto-optical recording medium shown in Figure 10 which has the single heat-dissipation layer.

As shown in Figure 11, the optimum Pr of the magneto-optical recording medium 2 of the second embodiment is higher than the optimum Pr of the magneto-optical recording medium having the single heat-dissipation layer by approximately 0.5 mW. The CNR value of the magneto-optical recording medium 2 of the second embodiment at the optimum Pr is higher than that of the magneto-optical recording medium having the single heat-dissipation layer by approximately 2 dB, that is, 45 dB or more, and therefore is sufficient for practical use. Furthermore, as shown in Figure 12, the optimum Pw of the magneto-optical recording medium 2 of the second embodiment is lower than the optimum Pw of the magneto-optical recording medium having the single heat-dissipation layer by approximately 1 mW.

The erase noise levels of the magneto-optical recording medium 2 of the second embodiment and the magneto-optical recording medium 8 having the single heat-dissipation layer were also measured. The results will be described below.

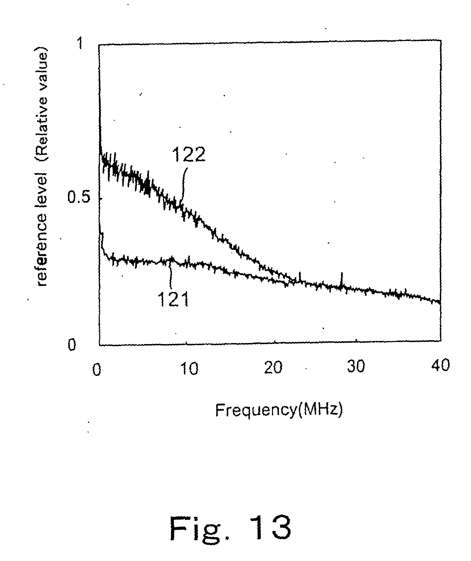

Figure 13 is a graph showing the results of measurements of the erase noise of the magneto-optical recording media shown in Figures 9 and 10.

The horizontal axis of the graph shown in Figure 13 represents frequency (in MHz) and the vertical axis represents the level of erase noise. The erase noise levels are represented by the ratio to 1, which is the normalized maximum erase noise of the magneto-optical recording medium having the single heat-dissipation layer shown in Figure 10. Shown in Figure 13 are the solid curve 121 representing the erase noise of the magneto-optical recording medium of the second embodiment in Figure 9 and the solid curve 122 representing the erase noise of the magneto-optical recording medium shown in Figure 10 which has the single heat-dissipation layer. The areas enclosed by the solid curves and the vertical and horizontal axes are equivalent to the levels of erase noise of the magneto-optical recording media at all frequencies measured. It can be seen from the graph in Figure 13 that the erase noise of RAD media can be reduced by providing a separation layer to separate a heat-dissipation layer into two.

It can be seen from the result described above that if the present invention is applied to a RAD medium, the RAD medium can be irradiated with a high-power laser beam during reproduction without increasing media noise and, in addition, heat sufficient for reducing the magnetic coercivity of the recording layer can be provided by irradiation with a moderate-power laser beam during recording. It should be noted that the present invention is not limited to RAD media but can be applied to other super-resolution media such as FAD (Front Aperture Detection) media and CAD (Center Aperture Detection) media as well.

A magneto-optical recording medium according to a third embodiment of the present invention will be described below.

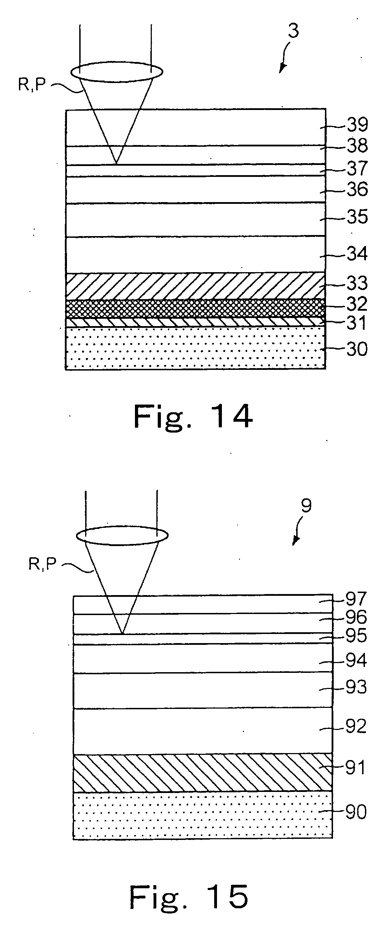

Figure 14 is a diagram schematically showing a layered structure of a magneto-optical recording medium 3 of the third embodiment.

The magneto-optical recording medium 3 shown in Figure 14 is a DWDD medium, which is an expansion system medium, on which information is recorded by irradiation with a recording optical beam R and application of a magnetic field and from which information is reproduced by irradiation with a reproducing optical beam P and application of a magnetic field. The magneto-optical recording medium 3, like the magneto-optical recording media 1, 2 of the embodiments described above, has a substrate 30 and a front-illumination layered structure on the substrate. However, the layered structure is a DWDD-medium-specific structure. That is, in the magneto-optical recording medium 3 shown in Figure 14, like the magneto-optical recording medium 1 of the first embodiment, a first heat-dissipation layer 31, a separation layer 32, and a second heat-dissipation layer 33 are stacked in that order on the substrate 30, however, stacked on the second heat-dissipation layer 33 are a recording layer 34, a switching layer 35, a control layer 36, a reproduction layer 37, a protection layer 38, and a cover layer 39 in that order. The substrate 30 of the magneto-optical recording medium 3 is of the same material and shape as the magneto-optical recording medium 1 of the first embodiment. Although omitted from the figure, patterns of projections and depressions are formed on the substrate surface. Among the layers 31 to 38 provided in the magneto-optical recording medium 3, the thickness, composition, and deposition conditions of the layers 31 to 34 and 37 to 39, excluding the switching layer 35 and control layer 36, are the same as those of the layers 21 to 24 and 26 to 28 with the same name as those of the magneto-optical recording medium 2 of the second embodiment. Accordingly, also in the magneto-optical recording medium 3, the relationship, the thermal conductivity of the first heat-dissipation layer 31 on the substrate 30 side > the thermal conductivity of the second heat-dissipation layer 33 on the recording layer 34 side > the thermal conductivity of the separation layer 32, holds.

Also in the DWDD medium, both of the first heat-dissipation layer 31 and the second heat-dissipation layer 33 are not limited to Al alloy films on which Si, Pd, and Cu are added but may have compositions shown in Table 1. The separation layer 32 is also not limited to a SiN film but may be any of the films shown in Table 3. Preferably, the relationship among the surface roughnesses Ra of the first heat-dissipation layer 31, separation layer 32, and second heat-dissipation layer 33 is: the surface roughness Ra of the first heat-dissipation layer 31 > the surface roughness Ra of the second heat-dissipation layer 33 > the surface roughness Ra of the separation layer 32.

Only the switching layer 35 and control layer 36 shown in Figure 14 will be described and the description of other layers will be omitted. The switching layer 35 is a TbFeAl magnetic film formed on the surface of the recording layer 34 by placing a TbFe alloy as the target, placing an Al chip on the target, and performing sputtering under a discharge power of 500 W and a gas pressure of 0.5 Pa. Like the intermediate layer 25 shown in Figure 9, the switching layer 35 is magnetized by the magnetic fields of marks formed in the recording layer 34, by heating under irradiation with a reproducing optical beam P.

The control layer 36 is a TbFeCo magnetic film formed on the surface of the switching layer 35 by sputtering under a discharge power of 800 W and a gas pressure of 0.8 Pa by using a TbFeCo alloy as the target. The control layer 36 functions so as to facilitate magnetization of the switching layer 35 by the magnetic fields of the marks formed in the recording layer 34.

For reference, an example of a conventional DWDD medium will be described with respect to Figure 15.

Figure 15 is a diagram schematically showing an example of a layered structure of a magneto-optical recording medium which is a conventional DWDD medium.

The magneto-optical recording medium 9 shown in Figure 15 is a front-illumination DWDD medium on which information is recorded by irradiation with a recording optical beam R and application of a magnetic field and from which information is reproduced by irradiation with a reproducing optical beam P and application of a magnetic field. In the DWDD medium, namely the magneto-optical recording medium 9, the separation layer 32 shown in Figure 14 does not exist and a heat-dissipation layer 91, a recording layer 92, a switching layer 93, a control layer 94, a reproduction layer 95, a protection layer 96, and cover layer 97 are stacked in that order on a substrate 90. That is, the magneto-optical recording medium 9 has only one heat-dissipation layer 91. The specific composition of the single heat-dissipation layer 91 is 95 at % of Ag, 1 at % of PD, 1 at % of Cu, and 3 at % of Si. The thickness of the heat-dissipation layer 91 is 40 nm.

Experiments were conducted on dependence of the CNRs of the magneto-optical recording media shown in Figures 14 and 15 on the power of a reproducing optical beam and a recording optical beam. The results will be described below.

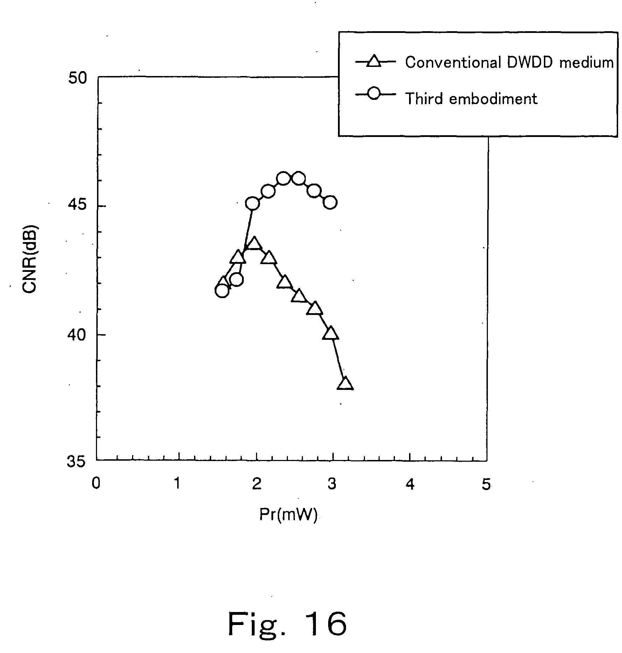

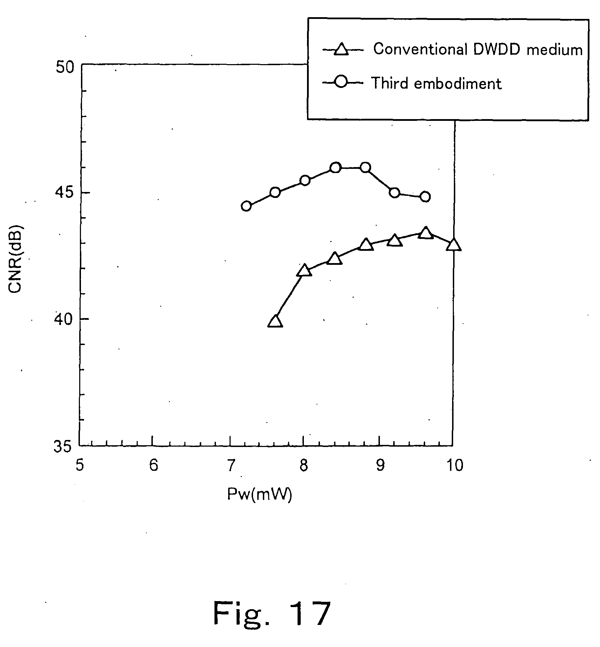

Figure 16 is a graph showing the dependence of the CNR of each of the magneto-optical recording media shown in Figures 14 and 15 on the power of a reproducing optical beam. Figure 17 is a graph showing the dependence of the CNRs of the two magneto-optical recording media on the power of a recording optical beam.

The CNRs were obtained by conducting experiments similar to the experiments on the power dependence of CNRs of the RAD media described above. The length of the marks recorded was 0.20 μm and the peripheral velocity of the magneto-optical recording medium during reproduction was 7.5 m/s.

The horizontal axis of the graph shown in Figure 16 represents the power Pr (in mW) of the reproducing optical beam and the horizontal axis of the graph shown in Figure 17 represents the power Pw (in mW) of the recording optical beam. The vertical axes of the graphs in Figures 16 and 17 represent CNR (in dB). In Figures 16 and 17, the solid curves connecting the circles plotted represent the results for the magneto-optical recording medium 3 of the third embodiment shown in Figure 16 and the solid curves connecting the triangles plotted represent the results for the magneto-optical recording medium 9 shown in Figure 15 which has the single heat-dissipation layer 91.

As shown in Figure 16, the optimum Pr of the magneto-optical recording medium 3 of the third embodiment is higher than the optimum Pr of the magneto-optical recording medium 9 having the single heat-dissipation layer by approximately 1.0 mW. Furthermore, the CNR value of the magneto-optical recording medium 3 of the third embodiment at the optimum Pr is higher than that of the magneto-optical recording medium 9 having the single heat-dissipation layer by 2 dB or more, that is 45 dB or more, and therefore is high enough for practical use. As shown in Figure 17, the optimum Pw of the magneto-optical recording medium 3 of the third embodiment is lower than the optimum Pw of the magneto-optical recording medium 9 having the single heat-dissipation layer by approximately 1 mW.

The levels of erase noise of the magneto-optical recording medium 3 of the third embodiment and the magneto-optical recording medium 9 having the single heat-dissipation layer were measured. The results of the measurements will be described below.

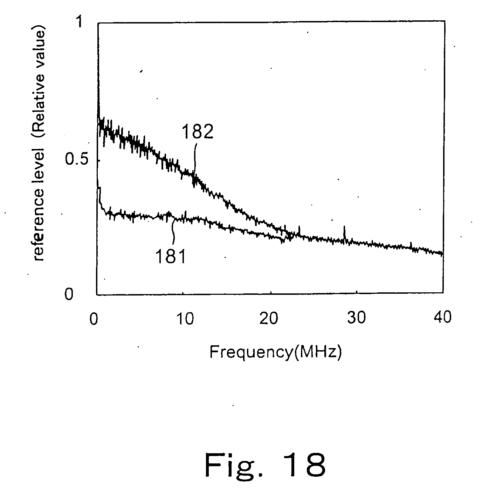

Figure 18 is a graph showing the results of measurement of erase noise of the magneto-optical recording medium shown in Figure 14 and the magneto-optical recording medium shown in Figure 15.

The horizontal axis of the graph shown in Figure 18 represents frequency (in MHz) and the vertical axis represents the level of erase noise. The erase noise levels are represented by the ratio to 1, which is the normalized maximum erase noise of the magneto-optical recording medium 9 having the single heat-dissipation layer. Shown in Figure 18 are the solid curve 181 representing the erase noise of the magneto-optical recording medium 3 of the third embodiment shown in Figure 14 and the solid curve 182 representing the erase noise of the magneto-optical recording medium 9 shown in Figure 15 which has the single heat-dissipation layer. The areas enclosed by the solid curves and the vertical and horizontal axes are equivalent to the levels of erase noise of the magneto-optical recording media at all frequencies measured. It can be seen from the graph in Figure 18 that erase noise of DWDD media can be reduced by providing a separation layer to separate a heat-dissipation layer into two.

It can be seen from the result described above that if the present invention is applied to a DWDD medium, the DWDD medium can be irradiated with a high-power laser beam during reproduction without increasing erase noise and, in addition, heat sufficient for reducing the magnetic coercivity of the recording layer can be provided by irradiation with a moderate-power laser beam during recording. It should be noted that the present invention is not limited to the DWDD media but can be applied to other expansion system media such as MAMMOS (Magnetically Amplified MO sys_tem) media as well.

All of the recording media of the three embodiments of the present invention described above require irradiation with an optical beam during reproduction. However, the present invention can be applied to magneto-optical recording media that do not require irradiation of an optical beam during reproduction. For example, the present invention can be applied to magneto-optical recording medium of so-called hard-disk type from which information is reproduced by detecting magnetic fluxes of the recording layer without irradiation with an optical beam during reproduction. An example in which a magneto-optical recording medium of the present invention is applied to a hard-disk-type magneto-optical recording medium will be described with respect to an embodiment of a magnetic recording apparatus.

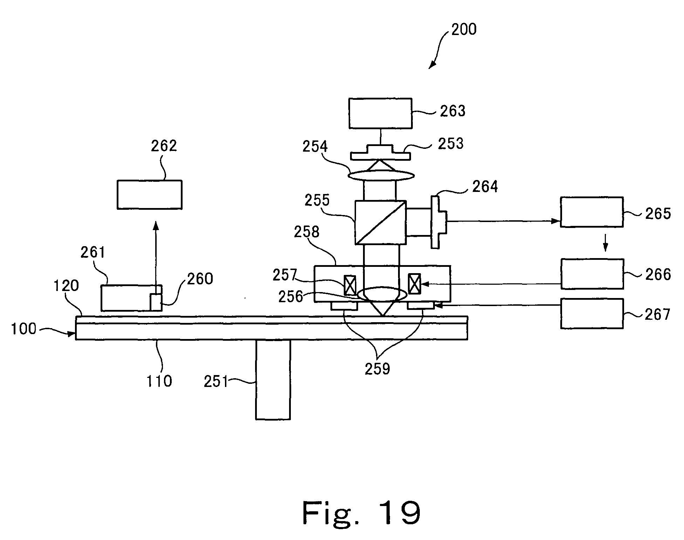

Figure 19 is a diagram schematically showing a configuration of an embodiment of a magnetic recording apparatus which records information on a hard-disk-type magneto-optical recording medium and reproduces the recorded information.

The magneto-optical recording medium 100 shown in Figure 19 has a disk diameter of 2. 5 inches and includes a flat glass substrate 110 and a front-illumination layered structure 120 on the glass substrate 110. The layered structure 120 includes a first heat-dissipation layer, a separation layer, a second heat-dissipation layer, a recording layer, a protection layer, and a lubricant layer stacked in that order on the glass substrate 110 side. The first heat-dissipation layer is a 10-nm-thick alloy film. Its specific composition is 96 at % of Ag, 1 at % of Pd, 1 at % of Cu, and 2 at % of Si. The separation layer is a 5-nm-thick SiN film. The second heat-dissipation layer is a 30-nm-thick alloy film having a thermal conductivity lower than the first heat-dissipation layer. Its specific composition is 94 at % of Ag, 1 at % of Pd, 1 at % of Cu, and 4 at % of Si. The recording layer is a 25-nm-thick TbFeCo magnetic film and its specific composition is 21 at % of Tb, 40 at % of Fe, and 39 at % of Co. The protection layer includes a 3-nm-thick SiN film, a 1-nm-thick Cr film formed on the SiN film, and a 1-nm-thick C film formed on the Cr film. The lubricant layer is a layer having a thickness of approximately 1 nm which is formed on the protection layer by applying a fluorocarbon resin by spin-coating.

The magnetic recording apparatus 200 shown in Figure 19, which is an example of a first magnetic recording apparatus of the present invention, rotates the magneto-optical recording medium 100 at a predetermined rotation speed by means of a spindle 251. The recording layer of the magneto-optical recording medium 100 is irradiated with laser beam from a laser diode 253. The laser beam is controlled so as to be rendered a parallel light beam by a collimate lens 254, then pass through a beam splitter 255, be condensed by an objective lens 256 provided on an optical-head slider 258 to focus on the recording layer. The laser diode 253 is pulse-modulated by a laser driving circuit 263 so that high-level and low-level optical power output can be provided.

During recording information, the laser driving circuit 263 causes a laser to oscillate and to be emitted, which irradiates the recording layer. Then, a recording coil 259 applies a direct-current magnetic field having a predetermined intensity in the upward direction of the diagram to the vicinity of a laser spot formed on the surface of the recording layer by the irradiation with the laser beam controlled for recording, thereby recording information from the upward magnetic field in the magnetic domain. Also, information from a downward magnetic field can be recorded in the magnetic domain by applying the downward magnetic field. A significant size reduction of the recording coil 259 can be achieved by disposing it close to the recording layer. The sufficiently small recording coil 259 enables magnetic field modulation recording. The recording coil 259 is controlled by a recording coil driving circuit 267. The optical-head slider 258, the recording coil 259, and other elements constitute a magneto-optical recording section.

The light path of light reflected from the recording layer is changed by the beam splitter 255 to the right-hand side of the diagram and converted by a photodetector 264 into an electric signal, and the focus direction is detected by a focus signal detecting circuit 265. The focus direction detected in the focus signal detecting circuit 265 controls a focusing coil driving circuit 266 to feed a focusing current through the focusing coil 257, which moves the objective lens 256 up and down in the diagram to control the laser spot to converge on the recording layer.

During reproduction, a magnetic reproduction element 260, which is an element provided on a magnetic-head slider 261 for detecting magnetic fluxes, detects a change in a magnetic domain (detects a magnetic flux corresponding to the direction of magnetization of a magnetic domain) and a reproduction-element drive detection circuit 262 allows information recorded at high density to be reproduced with a high CNR. The magnetic reproduction element 260, magnetic-head slider 261, and other elements constitute a magnetic reproducing section.

The dependence of the magnetic coercivity and saturation magnetization of the magneto-optical recording medium 100 shown in Figure 19 on temperature will be described below.

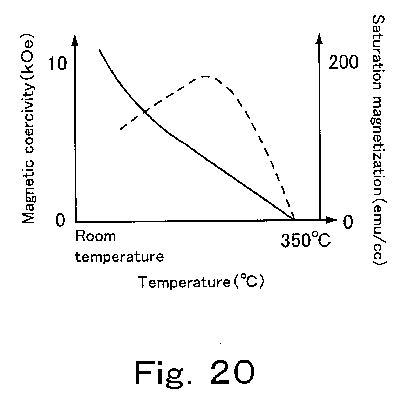

Figure 20 is a graph showing an example of variations in the magnetic coercivity and saturation magnetization of the magneto-optical recording medium shown in Figure 19 versus temperature.

The horizontal axis of the graph shown in Figure 20 represents temperature (degrees Celsius). The vertical axis of the graph represents the magnetic coercivity (kOe) and saturation magnetization (emu/cc), the solid curve represents the magnetic coercivity of the magneto-optical recording medium 100 shown in Figure 19, and dashed curve represents the saturation magnetization of the magneto-optical recording medium 100.

The magnetic coercivity of the magneto-optical recording medium 100 shown in Figure 19 at room temperature is 10 kOe or more, which decreases as the temperature rises, and reaches 0 at approximately 350 degrees Celsius indicated by the solid curve in the figure. Recording can be made by heating the recording layer up to the temperature at which the magnetic coercivity is obtained that enables recording with a recording magnetic field generated by the recording coil 259 provided on the optical slider 258 shown in Figure 19.

The value of saturation magnetization of the magneto-optical recording medium 100 shown in Figure 19 at room temperature is higher than or equal to 100 emu/cc. Therefore, magnetic fluxes from recorded marks can be reproduced by means of a conventional magneto-resistive element.

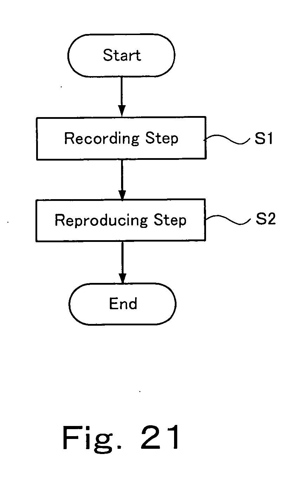

An information recording/reproducing method for the magneto-optical recording medium 100 shown in Figure 19 will be described below with reference to Figure 21.

Figure 21 is a flowchart illustrating an embodiment of the information recording/reproducing method according to the present invention.

To record information on the magneto-optical recording medium 100 shown in Figure 19, a magnetic field is applied with the magnetic coercivity of the recording layer being decreased by heating the magneto-optical recording medium 100 by irradiation with light (recording step S1). This causes magnetic domains to be recorded on the recording layer.

To reproduce information recorded on the magneto-optical recording medium 100 shown in Figure 19, magnetic leakage fluxes from magnetic domains recorded on the recording layer are detected (reproducing step S2). This allows a reproduction signal to be obtained.

The dependence of the CNR of the magneto-optical recording medium 100 shown in Figure 19 on laser recording power will be described below.

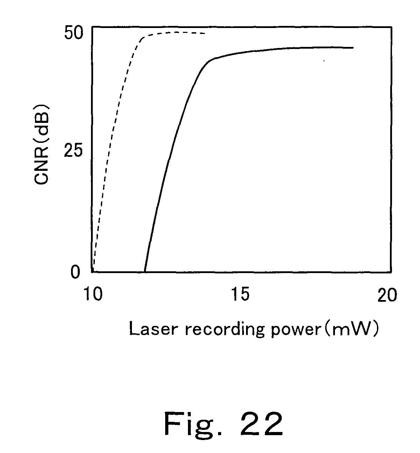

Figure 22 is a graph showing an example of variations in CNR of the magneto-optical recording medium shown in Figure 19 versus laser recording power.

The horizontal axis of the graph shown in Figure 22 represents laser recording power (mW) and the vertical axis represents CNR (dB). The solid curve in the graph represents the CNR characteristics of the magneto-optical recording medium shown in Figure 19. The dotted curve in the graph will be described later.

Here, the recording magnetic field is 400 oersteds. While the size of a recorded mark on the optical reproducing recording media described above on which reproduction is performed under irradiation with an optical beam was approximately 0.2 to 0.3 $\mu$m, the size of a recorded mark on the magnetic reproducing recording medium on which reproduction is performed by detecting magnetic fluxes was 50 nm. The width of the reproduction core of the magnetic-head slider used was 0.2 $\mu$m, the shield gap length was 0.09 $\mu$m. The wavelength of recording laser was 405 nm and the numerical aperture NA of the objective lens was 0.85.

As shown in Figure 22, the reproducing characteristics became almost saturated at a laser recording power of 15 mW. The magnetic reproduction enabled reproduction from a mark as small as 50 nm and significantly improved the reproducing characteristics compared with optical reproduction.

Other embodiments of a magnetic recording apparatus that records information on a magnetic reproducing recording medium and reproduces recorded information will be described below. While the magnetic recording apparatus 200 shown in Figure 19 has two sliders, the optical-head slider 258 and the magnetic-head slider 261, a magnetic recording apparatus described below has one slider into which these sliders are combined.

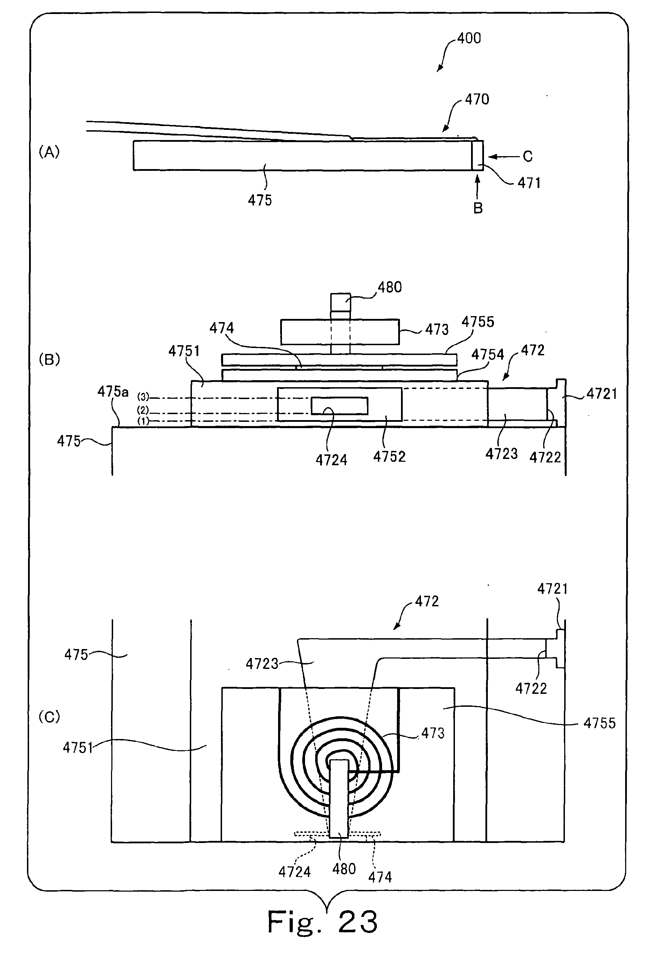

Figure 23 is a diagram schematically showing a configuration of a combined slider of a magnetic recording apparatus with combined slider.

A magneto-optical recording medium on which the magnetic recording apparatus performs recording/reproducing will be described first. While the magneto-optical recording medium, like the above-described media, has a first heat-dissipation layer, a separation layer, a second heat-dissipation layer, a recording layer, a protection layer, and a lubricant layer on a glass substrate, it differs from the above-described media in the material of the first and second heat-dissipation layers. That is, the first and second heat-dissipation layers of the magneto-optical recording medium 100 shown in Figure 19 are made from a non-magnetic material, whereas the first and second heat-dissipation layers of this magneto-optical recording medium are made from a soft magnetic material providing a heat dissipation effect. Metals such as Al- or Ag-based metals have high thermal conductivities. Even typical magnetic materials such as Co alloys or Fe alloys have thermal conductivities far higher than dielectric materials used as a separation layer. Furthermore, a large magnetic field can be provided by using a soft magnetic material because the magnetic field of the recording coil can be concentrated on the recording layer.

A FeAlC soft magnetic film having a thickness of 20 nm is used as the first heat-dissipation layer of the magneto-optical recording medium. A FeSiC soft magnetic film having a thickness of 30 nm is used as the second heat-dissipation layer. This magneto-optical recording medium is hereinafter referred to as the magneto-optical recording medium with soft magnetic film.

Like the separation layer of the magneto-optical recording medium shown in Figure 19, the separation layer of the magneto-optical recording medium with soft magnetic film is a 5-nm-thick SiN film. While the recording layer, like the recording layer of the magneto-optical recording medium shown in Figure 19, is a TbFeCo magnetic film, a 1-nm-thick SiN layer and a 1-nm-thick Pt layer are formed on the second heat-dissipation layer in that order so as to prevent an exchange bonding force from acting between the second heat-dissipation layer, which is the FeSiC soft magnetic film, and the TbFeCo magnetic film. Formed on the surface of the SiN/Pt layer are fine patterns of projections and depressions with an elevation difference of less than 10 nm. The second heat-dissipation layer reflects the fine patterns of projections and depressions so that it has a column structure, thus the recording resolution is improved. The dashed curve in Figure 22 represents the CNR characteristics of the magneto-optical recording medium with soft magnetic film versus the laser recording power. The CNR characteristics are based on the results of measurements performed under the same conditions as the conditions under which the CNR characteristics of the magneto-optical recording medium with non-magnetic film shown in Figure 19 versus the laser recording power were measured. It can be seen from comparison between the dashed curve and the solid curve shown in Figure 22 that the power required for recording on the magneto-optical recording medium with soft magnetic film, which is indicated by the dashed curve, is lower than the power required for recording on the magneto-optical recording medium 100 with non-magnetic film, which is indicated by the solid curve. This is because the first and second heat-dissipation layers of the magneto-optical recording medium with soft magnetic film have lower thermal conductivities than those in the magneto-optical recording medium 100 with non-magnetic film. Furthermore, the CNR of the magneto-optical recording medium with soft magnetic film is somewhat higher than that of the magneto-optical recording medium 100 with non-magnetic film. This improvement in CNR is largely attributed to the effect that the magnetic field on the magneto-optical medium with soft magnetic film is larger than that on the magneto-optical recording medium 100 with non-magnetic film.

The magnetic recording apparatus 400 a portion of which is shown in Figure 23 has a slider 470 on which a combined head 471 is provided.

Part (A) of Figure 23 shows a slider 470 in which the combined head 471 is provided at one end of a slider substrate 475 of the slider 470. In this figure, the magneto-optical recording medium moves from the left-hand side to the right-hand side of the figure.

Part (B) of Figure 23 is a diagram of the slider viewed from the direction of arrow B in Part (A) of Figure 23. That is, it is a diagram of the slider viewed from the slider surface (the surface facing the recording medium). The lower side of Part (B) of Figure 23 corresponds to the left-hand side of Part (A) of Figure 23 and the upper side of Part (B) of Figure 23 corresponds to the right-hand side of Part (A) of Figure 23.

Part (C) of Figure 23 is a diagram of the slider viewed from the direction of arrow C in Part (A) of Figure 23. That is, it is a side view of the combined head 471; the lower side of Part (C) of Figure 23 corresponds to the lower side of Part (A) of Figure 23 and the upper side of Part (C) of Figure 23 corresponds to the upper side of Part (A) of Figure 23.

The combined head 471 shown in Part (A) of Figure 23 is the combination of a laser irradiating section 472, a recording coil 473, and a magnetic reproduction element (magneto-resistive element 474) shown in Figures 23(B) and 23(C). Waveguide-type optics is provided in the laser irradiating section 472. The laser irradiating section 472 includes a laser diode 4721, a light inlet 4722, a waveguide 4723, and a light aperture 4724. The recording coil 473 is disposed at the rear of the light aperture 4724 through which light to be applied to the magneto-optical recording medium is emitted. The recording coil 473, which is omitted from Part (A) of Figure 23, is disposed on the right side of the light aperture 4724. The recording coil 473 is disposed in that position because a position in which temperature actually rises is rearward (the right side of Part (A) of Figure 23) of the spot position while the magneto-optical recording medium is rotating at a high speed. The magneto-resistive element 474 that detects magnetic fluxes is disposed between the light aperture 4724 and the recording coil 473.

The slider substrate 475 is made from AlTiC. Multiple combined heads can be formed on the AlTiC substrate at a time in a wafer process. This is the same method that is used for manufacturing a magnetic disk head. The manufacturing process will be described below with reference to Part (B) of Figure 23.

First, a foundation layer (a portion of a planarized layer 4751) is formed up to level (1) in Part (B) of Figure 23 in order to planarize the surface 475a of the slider substrate 475. Then, Au, which is used as a light shield section 4752, is deposited up to level (3) in Part (B) of Figure 23. The thickness of the Au film is 100 nm. Then, the surface of the deposited Au is patterned up to level (2) in the figure by photolithography technology (a process using a photoresist and etching). On top of this, Au is deposited again up to level (3) in the figure while the portion corresponding to the light aperture 4724 and other unnecessary portions are being masked with a photoresist. Then, the resist is removed by a lift-off method or other methods to form the light aperture 4724 and the light shield section 4752. The light aperture 4724 thus formed has a width, in the figure, of 100 nm and a height of 60 nm and the light shield section 4752 has a thickness of 50 nm.

Then alumina is formed on the light shield section 4752 by sputtering and polished to planarize to form a planarized layer 4751. A 200-nm-thick permalloy (a first shield layer 4754) is formed on the planarized layer 4751 and then patterned using photolithography to form the magneto-resistive element 474 as an element for detecting magnetic fluxes. A 200-nm-thick FeCo film (a second shield layer 4755) is formed on it. Then a 1-micrometer resist is formed and the recording coil 473 and a recording magnetic pole 480 are formed on it. The recording magnetic pole 480 has a width of 100 nm and a height of 50 nm. The recording coil 473 and the recording magnetic pole 480 act as elements for applying a magnetic field to the recording medium.

In this way, multiple combined heads 471 are formed on a single wafer and cut from the wafer, and each of which is used as a component of a slider 470.

Part (C) of Figure 23 shows the recording coil 473, which is not shown in detail in Part (B) of Figure 23. Here, the second shield layer 4755 and the recording magnetic pole 480 are connected by FeCo in the vertical direction (the vertical direction in Part (B) of Figure 23 and the direction normal to the plane of the page in Part (C) of Figure 23) and there is no gap in the magnetic path. A laser beam from the laser diode 4721 is guided from the light inlet 4722 to the waveguide 4723 so that the light can be cast (applied) to the recording medium through the light aperture 4724.

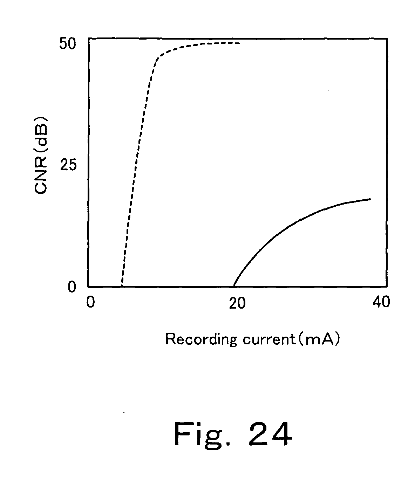

Figure 24 shows the results of investigation of the recording/reproducing characteristics of such a combined head 471.

Figure 24 is a graph showing an example of variations in CNR of the magneto-optical recording medium shown in Figure 23 versus a recording current.

The horizontal axis of the graph in Figure 24 represents the recording current (mA) and the vertical axis represents CNR (dB). The mark length measured is 50 nm. The solid curve in the figure represents the CNR characteristics of the magneto-optical recording medium with non-magnetic film shown in Figure 19 and the dashed curve represents the CNR characteristics of the magneto-optical recording medium with soft magnetic film. As can be seen from the graph in Figure 24, the one using soft magnetic films has high CNR characteristics with a low recording current.

For the magneto-optical recording medium with soft magnetic film, a magnetic flux from the recording magnetic pole 480 passes through the soft magnetic films before returning to the second shield layer 4755, therefore the magnetic field is large with respect to a magnetic domain to be recorded.

The magneto-optical recording medium with soft magnetic film enables recording with low laser recording power; a recording current Iw (current passed through the recording coil) of 20 mA is large enough for recording. Furthermore, the sense current Is passed through the magneto-resistive element 177 was 3 mA. These values are on the order of those used in typical magnetic recording.

**Claims**

1. A magneto-optical recording medium comprising:

   a substrate;
   a first heat-dissipation layer that is formed on the substrate and has a predetermined high thermal conductivity;
   a separation layer that is formed on the first heat-dissipation layer and has a low thermal conductivity lower than the high thermal conductivity;
   a second heat-dissipation layer that is formed on the separation layer and has a predetermined thermal conductivity higher than the low thermal conductivity but lower than the high thermal conductivity; and
   a recording layer that is formed above the heat-dissipation layers and on which data is recorded by irradiation with recording light and application of a magnetic field.

2. The magneto-optical recording medium according to claim 1, wherein, each of the first and second heat-dissipation layers is a layer which has one element selected from the group consisting of Al, Ag, Au, and Pt as the main component and to which at least one element selected from the group consisting of Cu, Pd, Si, Cr, Ti, and Co is added.

3. The magneto-optical recording medium according to claim 1, wherein each of the first and second heat-dissipation layers is made of a non-magnetic material.

4. The magneto-optical recording medium according to claim 1, wherein the separation layer is made of a material including at least one element selected from the group consisting of a Si element, an Al element, and a C element, or made of one compound selected from the group consisting of Si nitrides, Si oxides, Si carbides, Al nitrides, Al oxides, Fe carbides, Zn sulfides, and Zn oxides.

5. The magneto-optical recording medium according to claim 1, wherein the surface of the second heat-dissipation layer is smoother than the surface of the first heat-dissipation layer.

6. The magneto-optical recording medium according to claim 5, wherein the surface of the separation layer is smoother than the surface of the second heat-dissipation layer.

7. An information recording/reproducing method comprising:

   a recording step of recording, by irradiation with recording light and application of a magnetic field, information on a magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity; and a recording layer that is formed above the heat-dissipation layers and on which data is recorded by irradiation with recording light and application of a magnetic field; and
   a reproducing step of magnetically reproducing information from the recording layer side opposite to the substrate by detecting a magnetic flux of the recording layer.

8. A magnetic recording apparatus comprising:

   a recording section recording, by irradiation with recording light and application of a magnetic field, information on a magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity; and a recording layer that is formed above the heat-dissipation layers and on which data is recorded by irradiation with recording light and application of a magnetic field; and

a reproducing section magnetically reproducing information from the recording layer side opposite to the substrate by detecting a magnetic flux of the recording layer.

9. A magnetic recording apparatus comprising a single slider including:

a light irradiating element irradiating a magneto-optical recording medium with light to heat a recording layer of the magneto-optical recording medium, the magneto-optical recording medium having a substrate, a first heat-dissipation layer that is formed on the substrate and has a predetermined high thermal conductivity, a separation layer that is formed on the first heat-dissipation layer and has a low thermal conductivity lower than the high thermal conductivity, a second heat-dissipation layer that is formed on the separation layer and has a predetermined thermal conductivity higher than the low thermal conductivity but lower than the high thermal conductivity; and the recording layer that is formed above the heat-dissipation layers and on which data is recorded by irradiation with recording light and application of a magnetic field;

a magnetic-field applying element applying a magnetic field to the recording layer; and

a magnetic-flux detecting element detecting a magnetic flux of the recording layer.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

R,P

3

39
38
37
36
35
34
33
32
31
30

Fig. 14

9

R,P

97
96
95
94
93
92
91
90

Fig. 15

Fig. 16

Fig. 17

Fig. 18

Fig. 19

Fig. 20

Fig. 21

Fig. 22

Fig. 23

Fig. 24

## INTERNATIONAL SEARCH REPORT

| | |
|---|---|
| International application No. | |
| | PCT/JP03/13626 |

**A. CLASSIFICATION OF SUBJECT MATTER**
   Int.Cl$^7$ G11B11/10, 11/105

According to International Patent Classification (IPC) or to both national classification and IPC

**B. FIELDS SEARCHED**

Minimum documentation searched (classification system followed by classification symbols)
   Int.Cl$^7$ G11B11/10, 11/105

Documentation searched other than minimum documentation to the extent that such documents are included in the fields searched
   Jitsuyo Shinan Koho          1922–1996    Jitsuyo Shinan Toroku Koho    1996–2004
   Kokai Jitsuyo Shinan Koho    1971–2004    Toroku Jitsuyo Shinan Koho    1994–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-216686 A  (Sony Corp.),<br>10 August, 2001 (10.08.01),<br>Full text; all drawings<br>& US 2001/44000 A1 | 1-9 |
| Y | JP 2001-56975 A  (Tosoh Corp.),<br>27 February, 2001 (27.02.01),<br>Par. Nos. [0025] to [0031], [0056]; Fig. 4<br>(Family: none) | 1-9 |
| Y | JP 2001-266411 A  (Tosoh Corp.),<br>28 September, 2001 (28.09.01),<br>Par. Nos. [0028] to [0032]; Fig. 3<br>(Family: none) | 1-9 |

| | | | | |
|---|---|---|---|---|
| ☒ | Further documents are listed in the continuation of Box C. | ☐ | See patent family annex. | |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 February, 2004 (12.02.04) | 02 March, 2004 (02.03.04) |

| Name and mailing address of the ISA/ | Authorized officer |
|---|---|
| Japanese Patent Office | |
| Facsimile No. | Telephone No. |

**EP 1 555 669 A1**

| INTERNATIONAL SEARCH REPORT | International application No. |
|---|---|
| | PCT/JP03/13626 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-237098 A (Sony Corp.),<br>23 August, 2002 (23.08.02),<br>Par. Nos. [0043] to [0068]; Fig. 3<br>(Family: none) | 1-9 |
| Y | JP 4-219644 A (Ricoh Co., Ltd.),<br>10 August, 1992 (10.08.92),<br>Full text; all drawings<br>(Family: none) | 1-9 |
| Y | JP 2002-298312 A (Hitachi, Ltd.),<br>11 October, 2002 (11.10.02),<br>Par. Nos. [0068] to [0071]; Figs. 13, 14<br>(Family: none) | 7-9 |
| Y | JP 2002-298301 A (Toshiba Corp.),<br>11 October, 2002 (11.10.02),<br>Full text; Fig. 5<br>(Family: none) | 7-9 |

44